# EUROPÄISCHE PATENTSCHRIFT

(11) **EP 3 416 778 B1**
(45) Veröffentlichungstag und Bekanntmachung des Hinweises auf die Patenterteilung: **20.10.2021**
(21) Anmeldenummer: 17718004.9
(22) Anmeldetag: 15.02.2017
(51) Int. Cl.: B23Q 39/02

(54) **UMLAUFENDES ROHRMAGAZIN MIT VERFAHRBAREN SPEICHERDECKELN**
REVOLVING TUBE MAGAZINE COMPRISING DISPLACEABLE HOLDER COVERS
MAGASIN TUBULAIRE ROTATIF À COUVERCLES DE STOCKAGE MOBILES

(30) Priorität: 17.02.2016 DE 102016001804
(43) Veröffentlichungstag der Anmeldung: 26.12.2018
(73) Patentinhaber: Benz GmbH Werkzeugsysteme, 77716 Haslach (DE)
(72) Erfinder: ZELLER, Christoph, 77756 Hausach (DE); GIESSLER, Wilhelm, 77756 Hausach (DE)
(74) Vertreter: Hoffmann Eitle
(86) Internationale Anmeldenummer: PCT/DE2017/000031
(87) Internationale Veröffentlichungsnummer: WO 2017/140291

(56) Entgegenhaltungen:
- WO-A1-2015/008124
- DE-A1- 3 908 586
- DE-A1-102012 104 490

## Beschreibung

Die Erfindung betrifft ein umlaufendes Rohrmagazin mit mehreren in einer Werkzeugaufnahmeebene liegenden Werkzeugaufnahmen, in dessen Innenraum eine Arbeitsspindel in einem werkzeugmaschinenseitig ortsfest angeordneten formsteifen Zentralblock gelagert ist.

In den meisten Bearbeitungszentren, in denen zeitgleich mehrere vergleichbare Bearbeitungen durchgeführt werden, werden Revolverköpfe eingesetzt, die mehrere Werkzeugebenen aufweisen, vgl. DE 20 2014 105 912 U1. Mit den hier gezeigten Revolverköpfen wird beispielsweise ein Vierzylindermotorengehäuse bearbeitet. Alle am Revolverkopf angeordneten Werkzeuge haben ihre eigenen Antriebe oder werden über ein im Revolverkopf angeordnetes Getriebe angesteuert. Dabei ist jede werkzeugtragende Werkzeugaufnahme im umlaufenden Grundkörper des Revolverkopfes mittels einer hochpräzisen Schnittstelle formsteif gehalten. Dadurch muss bei jedem Weitertakten von einer Werkzeuggruppe zur nächsten, der massive schwere Grundkörper weitergeschwenkt werden. In dieser Wechselphase ist keine hohe Dynamik erreichbar.

Aus der EP 1 399 293 B2 ist ebenfalls ein Revolverkopf bekannt. Bei dieser Variante wird im Zentrum eine Antriebsspindel untergebracht, die sich an der Werkzeugmaschine mittels einer Drehmomentstütze abstützt. Um die Antriebsspindel herum rotiert ein scheibenförmiger Revolverkopf. Letzterer lagert die verschiedenen Werkzeughalter. Zwischen dem Revolverkopf und der Antriebsspindel sitzt eine hydraulisch gesteuerte spielbehaftete Schiebekupplung, über die die Welle der Arbeitsspindel an der Welle der Werkzeugaufnahme angekuppelt wird. Um nun eine brauchbare Wiederholgenauigkeit zu erzielen, muss der Revolverkopf auch hier formsteif und massiv ausgeführt sein. Da bei einem Rotationskörper, wie einem Revolverkopf, das Massenträgheitsmoment vom Quadrat des Radius abhängt, ist bei dieser Lösung die Weitertaktdynamik nur unwesentlich besser als beim Gegenstand des Gebrauchsmusters DE 20 2014 105 912 U1.

Ein Werkzeugrevolver ist somit ein Träger von mehreren angetriebenen Werkzeugen. Auf seinem Basiskörper, z.B. einer Planscheibe oder einem Stern, sind Werkzeuge fest montiert und präzise ausgerichtet. Der Basiskörper, das zentrale Bauteil des Werkzeugrevolvers, leitet die am Werkzeug entstehenden Bearbeitungskräfte und -momente direkt an die Werkzeugmaschine weiter. Der Basiskörper muss folglich so formsteif sein, dass es beim Werkzeug - während des Bearbeitungsvorganges - an der Werkzeugschneide nicht zu Positionsabweichungen kommt. Der Träger bewerkstelligt somit das Halten der Werkzeugposition unter Bearbeitungsbelastung. Zudem müssen bei Revolverköpfen die Werkzeugaufnahmen nach jedem Austausch neu ausgerichtet werden.

Aus der DE 10 2012 104 490 A1 ist ein Werkzeugträgersystem für eine Werkzeugmaschine bekannt, bei der an einer Werkstückträgerbasis ein Basisteil befestigt ist, in dem eine Arbeitsspindel angeordnet ist. An der Werkstückträgerbasis ist ferner ein Flansch gelagert, der sich mittels eines Hubzylinders gegenüber dem Basisteil verschieben lässt. Am Flansch sitzt rotierbar eine Werkzeugträgereinheit. Letztere lagert als Magazin die Werkzeughalteaufnahmen. Zum Arbeiten wird die Werkzeugträgereinheit gegen die Vorderseite der im Basisteil sitzenden Arbeitsspindel verfahren, um die Arbeitsspindel an die gewählte Werkzeughalteaufnahme zu kuppeln. Nach dem Kuppeln führt die Werkzeugträgereinheit nochmals gegen die Vorderseite der Arbeitsspindel einen Hub aus, um die Werkzeugaufnahme aus ihrer Arretierung an der Werkzeugträgereinheit zu lösen. Ferner offenbart die WO 2015/008124 A1 ein gattungsgemäßes Rohrmagazin.

Der vorliegenden Erfindung liegt das Problem zugrunde, ein umlaufendes Rohrmagazin zu entwickeln, das räumlich vor einer Arbeitsspindel eine bestimmbare werkzeugtragende Werkzeugaufnahme und/oder ein bestimmtes Werkzeug wiederholgenau - bei kurzer Werkzeugwechselzeit - zum Einspannen und Antreiben positionieren kann.

Das Problem wird mit den Merkmalen des Patentanspruchs 1 gelöst. Dazu weist der Zentralblock zur Aufnahme der Werkzeugaufnahmen und/oder Werkzeuge - in jeweils einem Werkzeugaufnahmeplatz - einen ein- oder mehrteiligen Magazinrohrkörper auf. Der Magazinrohrkörper ist um den Zentralblock angetrieben, rotierbar wälz- und/oder gleitgelagert. Der Magazinrohrkörper weist pro Werkzeugaufnahmeplatz einen Speicherdeckel zur Magazinierung einer Werkzeugaufnahme und/oder eines Werkzeuges auf. Der Speicherdeckel ist mit der für die Werkstückbearbeitung erforderlichen Werkzeugaufnahme und/oder dem erforderlichen Werkzeug am Zentralblock vor der vorderen Stirnseite der Arbeitsspindel in Umlaufrichtung des Magazinrohrkörpers - in einer Arbeitsposition - zum Andocken am Zentralblock und/oder zum Ankuppeln der Werkzeugaufnahme und/oder des Werkzeugs an der Arbeitsspindel positionierbar.

Ein Werkzeugmagazin in Form des beschriebenen Rohrmagazins gilt als Peripheriegerät einer Werkzeugmaschine. Es dient der Aufbewahrung bzw. "Speicherung" der Werkzeugaufnahmen und/oder der Werkzeuge, die die Werkzeugmaschine, z.B. eine Drehmaschine, gerade nicht im Einsatz hat. Im vorliegenden Beispiel wird ein ausgewähltes Werkzeug durch eine Magazindrehung und eine lineare Verlagerung des auf einem Speicherdeckel gelagerten Werkzeugs, vor die im Zentralblock angeordnete - nicht längsverschiebbare - Arbeitsspindel gebracht. Im Werkzeugmagazin sind die Werkzeuge in einem Magazinrohrkörper nur so genau abgelegt, dass die Arbeitsspindel sie - nach dem Heranführen des Speicherdeckels und dessen Absetzen am Zentralblock - aufnehmen kann. Erst nachdem die Arbeitsspindel das entsprechende Werkzeug mit seinem Spannmittel übernommen hat, ist das Werkzeug in der Drehmaschine präzise und wiederholgenau positioniert. Die Arbeitsspindel leitet über ihr im Zentralblock sitzendes Gehäuse die Bearbeitungskräfte an die Werkzeugmaschine ab. Die werkzeugspeichernden Aufbewahrungsplätze des Magazins umgeben mit großem Spiel das rotierende Werkzeug, ohne dieses zu stützen oder in sonstiger Weise zu beeinflussen.

Das Werkzeugmagazin kann neben dynamischen Werkzeugen auch statische Werkzeugaufnahmen bzw. -halter oder Werkzeuge speichern, die nicht von der Arbeitsspindel angetrieben werden, wie z.B. einen Drehmeißel oder eine Greifvorrichtung. Sind die Werkzeugaufnahmen oder Werkzeuge aus ihrer Magazinposition in die Arbeitsposition geschwenkt worden, werden diese über ihren Speicherdeckel, auf dem sie in der Regel starr montiert oder angeformt sind, am Zentralblock formsteif aber lösbar angedockt. Somit werden alle auf das Werkzeug wirkenden Kräfte direkt über Speicherdeckel in den Zentralblock und von da an die Werkzeugmaschine weitergeleitet.

Da der Magazinrohrkörper während der Werkstückbearbeitung keine Funktion hat, muss er zum einen nur die Gewichtskräfte der in ihm abgelegten Werkzeugaufnahmen und Werkzeuge tragen. Zum anderen muss er nur so formsteif und schwenkgenau sein, dass der Zentralblock die Speicherdeckel und die Arbeitsspindel die ausgewählte Werkzeugaufnahme, jeweils mit ihren speziellen Spannmitteln, ergreifen können. Dadurch kann der Magazinrohrkörper - im Vergleich zum werkzeugtragenden Kopf eines Revolvers - dünnwandig und/oder elastisch ausgeführt sein. Es können für den Magazinrohrkörper Werkstoffe eingesetzt werden, deren jeweiliger E-Modul unterhalb von 80000 N/mm² liegt. Somit sind als Werkstoffe Aluminiumlegierungen oder auch Verbundwerkstoffe auf Glasfaser- oder Kohlefaserbasis denkbar. In der Folge lässt sich das polare Massenträgheitsmoment des Magazinrohrkörpers - gegenüber eines in den Außenabmessungen vergleichbaren Revolverkopfes - aufgrund der geringeren Wandstärken und/oder der geringeren Werkstoffdichte um mehr als den Faktor 5 absenken. Das wirkt sich direkt auf die Dynamik des Magazins aus. Eine 360-Winkelgraddrehung erlaubt gegenüber einem konventionellen Revolver eine Drehzahlerhöhung um das Mehrfache.

Das Rohrmagazin ist u.a. für den Einsatz in Drehmaschinen geeignet, da der Abstand zwischen der Ebene, in der sich zumindest bei dynamischen Werkzeugaufnahmen die Mittellinie des jeweils rotierenden Werkzeugs befindet, und der Vorderkante des Magazinrohrkörpers (100) eine Länge hat, die kleiner ist als 25% des maximalen Durchmessers des Magazinrohrkörpers (100). Bei der Größenangabe des Durchmessers - die auch für andere relative Längenverhältnissangaben gilt - wird die Auskraglänge der Werkzeugaufnahmen und der Werkzeuge nicht berücksichtigt.

Weitere Einzelheiten der Erfindung ergeben sich aus den Unteransprüchen und den nachfolgenden Beschreibungen von schematisch dargestellten Ausführungsformen.
- Figur 1:: Perspektivische Ansicht einer mit einem Rohrmagazin ausgestatteten Drehmaschine;
- Figur 2:: Detail aus Figur 1;
- Figur 3:: Perspektivische Ansicht des Rohrmagazins;
- Figur 4:: Perspektivische Ansicht des Rohrmagazins ohne Magazinrohrkörper, Magazinstützdeckel und Kreuzrollenlager;
- Figur 5:: wie Figur 4, jedoch um 90° gegenüber Figur 4 gedreht und zusätzlich mit Magazinrohrkörper;
- Figur 6:: Längsschnitt des Rohrmagazins;
- Figur 7:: Querschnitt des Rohrmagazins mit Werkzeugaufnahmen;
- Figur 8:: Längsschnitt einer Arbeitsspindel;
- Figur 9:: Speicherdeckel von schräg oben;
- Figur 10:: Speicherdeckel von schräg unten;
- Figur 11:: Längsschnitt des speicherdeckelseitigen Anschlagriegels, offen, vergrößert;
- Figur 12:: wie Figur 11, jedoch geschlossen;
- Figur 13:: Perspektivische Ansichten des Einzugdoppelhakens und des Einzugsbolzens;
- Figur 14:: Perspektivische Ansicht der Stützhülse und des Stützbolzens;
- Figur 15:: Querschnittsausschnitt des Rohrmagazins im Bereich des Einzugdoppelhakens;
- Figur 16:: Querschnittsausschnitt des Rohrmagazins im Bereich der Stützhülse;
- Figur 17:: Teilschnitt durch das Rohrmagazin bei nicht herangezogenem Speicherdeckel und bei nicht adaptierter Werkzeugaufnahme;
- Figur 18:: vergrößertes Detail zu Figur 17;
- Figur 19:: Teilschnitt durch das Rohrmagazin bei herangezogenem Speicherdeckel und herangeführter, aber noch nicht adaptierter Werkzeugaufnahme;
- Figur 20:: vergrößertes Detail zu Figur 19;
- Figur 21:: Teilschnitt durch das Rohrmagazin wie Figur 19, jedoch mit adaptierter Werkzeugaufnahme;
- Figur 22:: vergrößertes Detail zu Figur 21;
- Figur 23:: Schnitt durch ein Werkzeugaggregat;
- Figur 24:: Schnitt durch einen Speicherdeckel und einen Haltering;
- Figur 25:: Halbschnitt durch eine dynamische Werkzeugaufnahme für einen halbautomatischen Werkzeugwechsel, vergrößert;
- Figur 26:: Teilschnitt zu Figur 25 mit gespannter Schnittstelle ohne eingewechseltes Werkzeug;
- Figur 27:: Schnitt durch eine statische Werkzeugaufnahme mit einer HSK-Werkzeugaufnahme;
- Figur 28:: Schnitt durch eine statische Werkzeugaufnahme in Form eines Parallelgreifers;
- Figur 29:: Perspektivische Ansicht eines Speicherdeckels mit Drehmeißel.

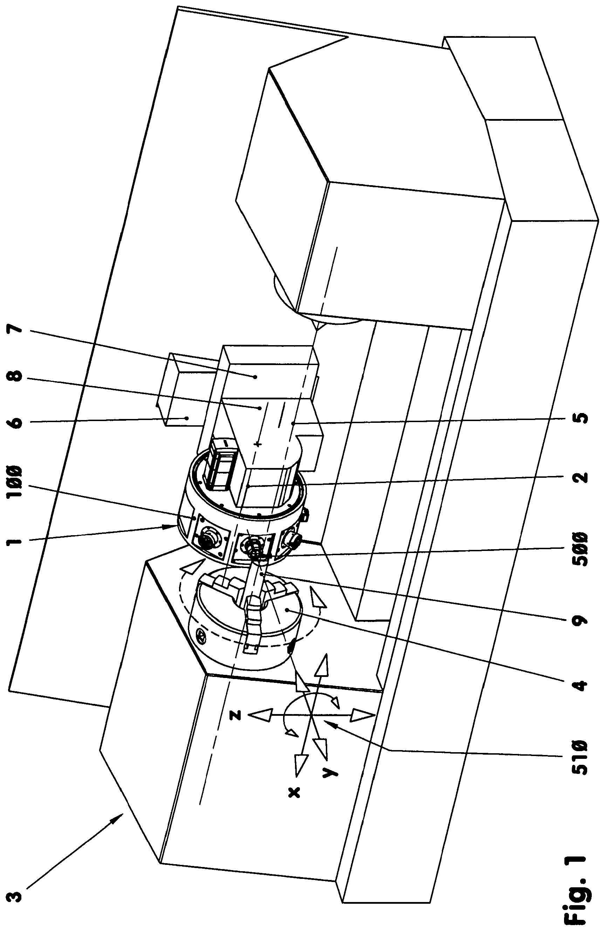

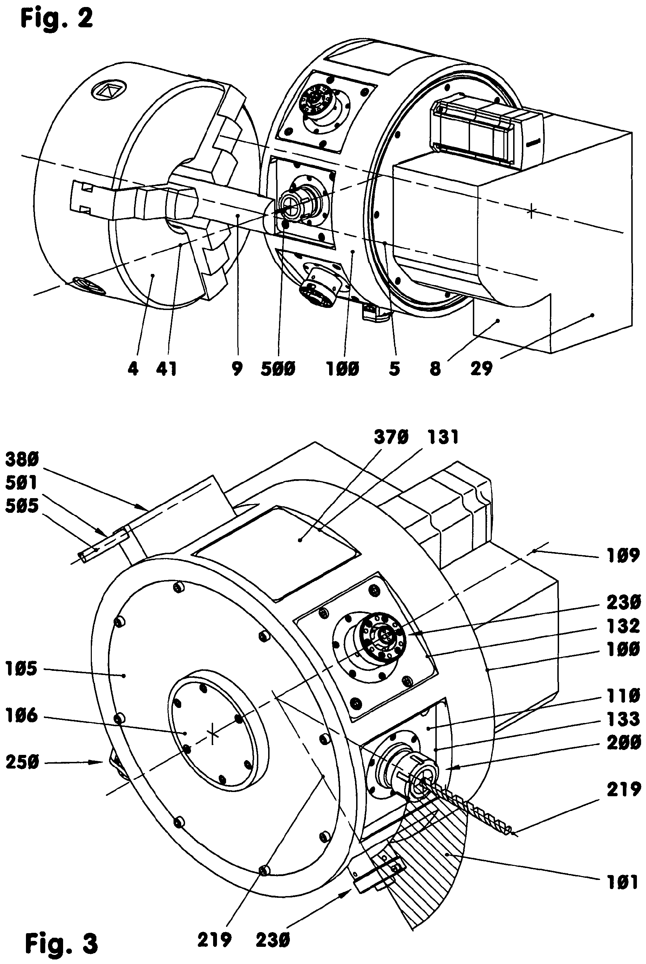

Die Figur 1 zeigt eine Drehmaschine (3), die mit einem Dreibackenfutter (4) und mindestens einem Rohrmagazin (1) mit interner Spindel ausgestattet ist. Die Drehmaschine (3) ist z.B. eine horizontale Schrägbettmaschine, in deren hinteren Bereich das Rohrmagazin (1) ggf. auf einem x- einem y- und einem z-Schlitten (8, 6, 7) gelagert ist, während gegenüber dem Dreibackenfutter (4) auf dessen Mittellinie (5) eine Pinole angeordnet ist. Das Rohrmagazin (1) hat einen Magazinrohrkörper (100), der um die Mittellinie (2) des Rohrmagazins (1) drehbar gelagert ist. Im Dreibackenfutter (4) ist ein Werkstück (9) eingespannt, das gerade bei stillstehendem Dreibackenfutter (4) mit einem Werkzeug (500), z.B. einem Bohrer, vgl. Figur 2, spanend bearbeitet wird.

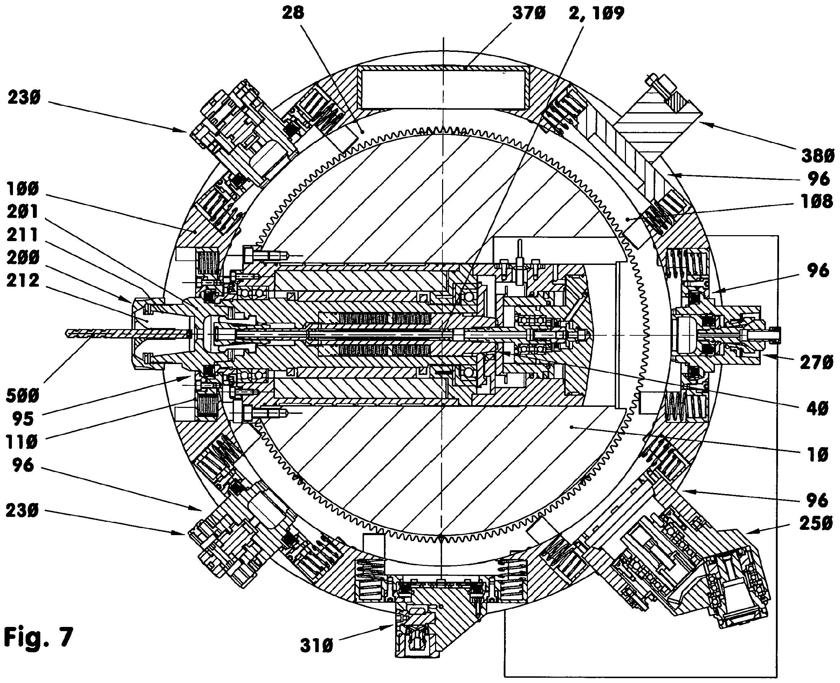

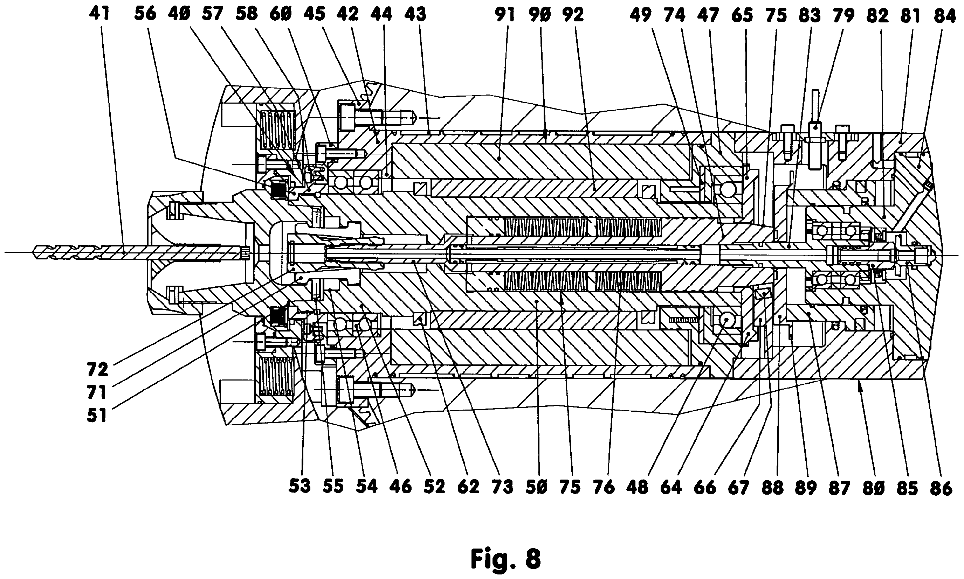

Der heraus- oder hineinfahrende y-Schlitten (6) lagert einen rauf- oder runterbeweglichen z-Schlitten (7), der wiederum den bezüglich der Mittellinie (5) vor- oder zurückfahrenden, rohrmagazintragenden x-Schlitten (8) lagert. Aufgrund der drei Schlitten (6 - 8) lässt sich das Werkzeug (500) entlang der im Achsenkreuz (510) dargestellten Richtungen auf vorgebbaren geraden oder gekrümmten Raumkurven verfahren, während die magazineigene Spindel, vgl. Figuren 7 und 8, eine Rotation um die y-Achse ermöglicht.

Das Rohrmagazin (1) wird in Figur 3 als einzelne Komplettbaugruppe mit verschiedenen Werkzeugaufnahmen (200, 230, 250, 380) gezeigt. Zu sehen ist der rotierbare Magazinrohrkörper (100) mit seinem vorderen Magazinrohrstützdeckel (105). Im z.B. gitterförmigen Magazinrohrkörper (100) sind hier acht Speicherdeckel (110) eingebaut. Jeder Speicherdeckel (110) stellt einen einzelnen Werkzeugaufnahmeplatz (131-138) dar und bewahrt nur beispielhaft dort eine Werkzeugaufnahme (200, 230, 250, 270) oder einen Werkzeughalter (310, 340, 380) auf, teilweise in Figur 7 gezeigt, wobei der Magazinrohrkörper (100) über eine Werkzeugaufnahmeebene (101) verfügt, in der die Werkzeugaufnahmeplätze (131-138) alle auf dem Umfang verteilt sind und deren Mittellinien sowohl in der Ebene (101) liegen als auch die Mittellinie (109) des Magazinrohrkörpers (100) in einem Punkt schneiden. Nach Figur 3 sind in den Speicherdeckeln (110) - im Uhrzeigerdrehsinn nach einem Blinddeckel (370) sichtbar aufgereiht - ein Handspanner (230), eine einfache dynamische Werkzeugaufnahme (200), ein weiterer Handspanner (230), ein Werkzeugaggregat (250) und ein statische Werkzeughalter (380) angeordnet.

Selbstverständlich kann das Rohrmagazin (1) entlang seiner Mittellinie (2) auch länger gebaut werden, so dass zwei, drei oder mehr Werkzeugaufnahmeebenen entstehen.

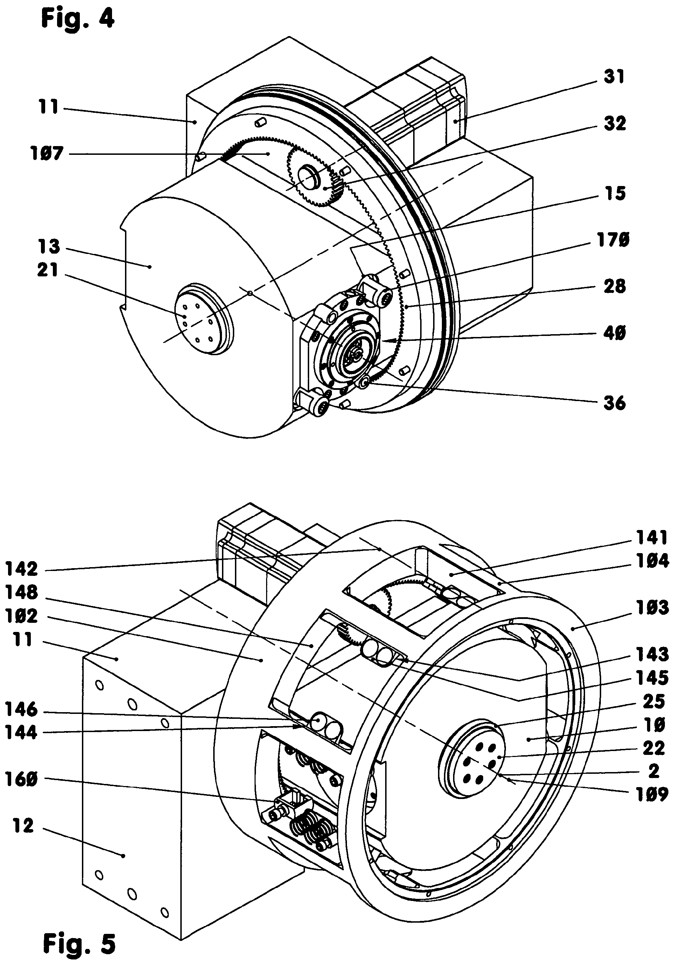

Das Rohrmagazin (1) hat als Basisteil einen z.B. aus GGG 40 gefertigten Zentralblock (10), vgl. Figur 4, 5 und 6, der z.B. im Wesentlichen aus einem an einem Quader (11) angeformten zumindest bereichsweise zylindrischen Zapfen besteht. Der Zentralblock (10) ist quaderseitig ggf. als x-Schlitten (8) mit seiner z.B. seitlichen Befestigungsseite (12), z.B. an dem ihn tragenden z-Schlitten (7) der Drehmaschine (3) verfahrbar gelagert. Er hat am z-Schlitten (7) eine große Auflagebasis bzw. -fläche. Die Höhe der Befestigungsfläche des Quaders (11) ist größer als 75% des Maximaldurchmessers des rotierbaren Magazinrohrkörpers (100), wodurch sich eine gute Abstützwirkung ergibt.

Der Zentralblock (10) weist im Ausführungsbeispiel eine große Querausnehmung (14) auf, in der eine Arbeitsspindel (40) eingebaut ist.

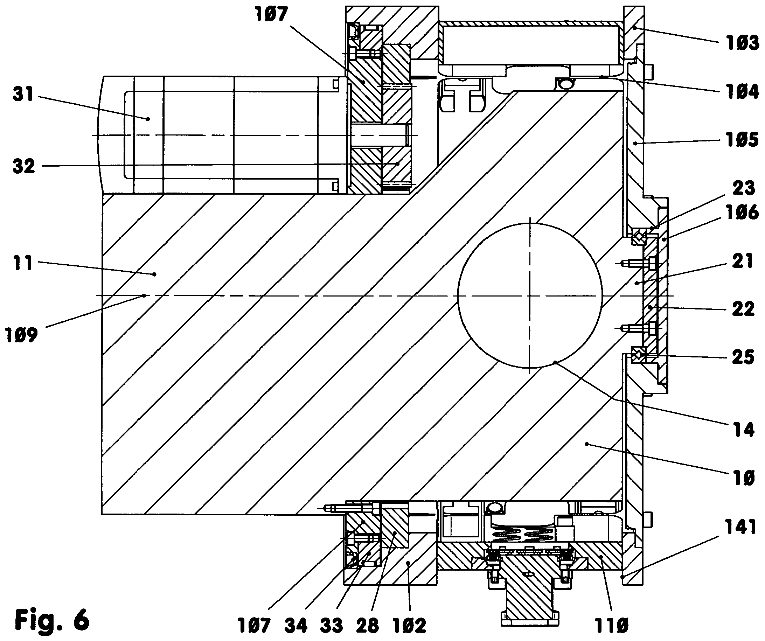

An dem Zentralblock (10), vgl. Figur 6, ist im mittleren Bereich der Magazinrohrkörper (100) mittels einer ggf. mehrteiligen, ortsfesten Basisplatte (107) rückseitig wälzgelagert und abgedichtet angeordnet. Die Basisplatte (107) ist auch gegenüber dem Zentralblock (10) abgedichtet.

Zur Lagerung des Magazinrohrkörpers (100) an der hinten liegenden Basisplatte (107) trägt Letztere den Innenring (33) eines als Loslager dienenden Nadellagers, auf dessen Wälzkörper der Magazinrohrkörper (100) direkt aufliegt. Die umlaufenden Nadeln werden axial geführt in einem Nadellagerinnenring (33). Im vorderen Bereich ist der Magazinrohrkörper (100) über den Magazinrohrstützdeckel (105) und ein Kreuzrollenlager (25) oder einem anderen Wälzlager im Bereich der Stirnseite (13) gelagert. Dazu befindet sich an der Stirnseite (13) ein z.B. gestufter Zapfen (21), auf dem das Wälzlager (25) mit seinem Innenring sitzt. Das als Festlager dienende Wälzlager (25) ist über eine Anschraubscheibe (22) axial am Zapfen (21) befestigt. Der Außenring des Wälzlagers (25) sitzt in einer gestuften Bohrung (23) des Magazinrohrstützdeckels (105). Die Bohrung (23) ist mittels eines Lagerdeckels (106) dicht verschlossen. Zwischen dem Bund der gestuften Bohrung (23) und einem am Lagerdeckel (106) vorhandenen Stützkragen ist der Außenring des Wälzlagers (25) axial eingespannt, vgl. Figur 6.

Die Basisplatte (107) weist z.B. in der Höhe der umlaufenden Nadeln des Nadellagerinnenrings (33) an ihrem äußeren Randbereich einen Dichtring (34) auf. Der Dichtring (34), der eine relativ formsteife Lippendichtung ist, liegt an einer fein bearbeiteten Dichtgleitfläche des Magazinrohrkörpers (100) an. Die Dichtlippe des Dichtrings (34) ist nach außen orientiert.

Über der Oberseite des Quaders (11) befindet sich ein elektromechanischer Rotationsantrieb (31), vgl. Figuren 1, 2 bis 6, der zentriert an der Basisplatte (107) angeflanscht ist. Er umfasst mindestens ein Winkelmesssystem, ggf. einen Tachogenerator und ein Untersetzungsgetriebe. Der Getriebeausgang des Rotationsantriebs (31) ist ein Stirnrad (32), das eine zur Zentralblockmittellinie (2) parallele Mittellinie aufweist, die zugleich mit der Mittellinie (109) eine vertikale Längsschnittmittelebene bildet. Das Stirnrad (32), dessen Welle die Basisplatte (107) abgedichtet durchdringt, kämmt mit einem Hohlrad (28), das mit dem Magazinrohrkörper (100) neben dem Nadellagerinnenring (33) verschraubt ist.

Der Rotationsantrieb (31) kann ein Servomotor sein, der mit einem Stirnradgetriebe, einem Plantengetriebe, einem spielminimierten Umlaufgetriebe oder einem Zugmittelgetriebe zusammenwirkt. Alternativ kann der Rotationsantrieb (31) auch aus einem Torquemotor, einem Hydraulik- oder einem Pneumatikmotor bestehen. Die beiden letztgenannten Antriebe können mit einem Rast- oder Schrittschaltmechanismus ausgestattet sein, der auch oder nur einen getakteten bzw. diskontinuierlichen Antrieb ermöglicht. Ferner ist auch eine Kombination verschiedener Motoren- und/oder Getriebearten denkbar.

Die in der Querausnehmung (14) des Zentralblocks (10) gelagerte Arbeitsspindel (40), vgl. Figuren 6 bis 8, hat ein rohrförmiges Motorengehäuse (42), in dessen radialer Außenwandung eine Spiralnut (43) eingearbeitet ist. In der Spiralnut (43), die durch die Innenwandung der Querausnehmung (14) einen geschlossenen Kanalquerschnitt erhält, wird Kühlmittel für den Elektromotor (90) geführt. Das Motorengehäuse (42) hat im vorderen Bereich einen Innenflansch (44), an dem vorn z.B. zwei nebeneinander angeordnete spindellagernde Schulterlager (46), z.B. über einen Distanzring, axial anliegen. An der hinteren Stirnfläche des Innenflansches steht der Stator (91) des Antriebsmotors (90) an.

Das Motorengehäuse (42) lagert an seinem hinteren Ende einen Flanschdeckel (47) mit einem nach außen weisenden Innenbund, in dem über eine Flanschhülse (49) ein weiteres Schulterlager (48) gelagert ist. Der Flanschdeckel (47) weist mehrere axiale Sacklochbohrungen auf, in denen Schraubendruckfedern angeordnet sind, die den Außenring des Schulterlagers (48) über die Flanschhülse (49) nach außen pressen. Die die Spindelwelle (50) lagernden Schulterlager (46, 48) befinden sich in O-Anordnung.

Die hohle Spindelwelle (50), deren Durchmesser sich von vorn nach hinten stufenweise verjüngt, weist vorn - im Bereich des Spindelkopfs - einen Lagersitz (52) für die Schulterlager (46) auf. Vor dem Lagersitz (52) hat sie ein Außengewinde (53), auf dem eine am Innenring des äußeren Schulterlagers (46) anliegende axial spannende Gewindehülse (56) aufgeschraubt ist. Letztere hat einen Gewindehülsenflansch (57), vgl. Figur 8, der einen Mehrfachumgriff (58) zur Ausbildung einer Sperrluftlabyrinthdichtung aufweist. Der Mehrfachumgriff (58) umgreift teilweise einen Bereich des vorderen Gehäusedeckels (60) mit Spiel. Der am Motorengehäuse (42) angeschraubte Gehäusedeckel (60) umgibt mit radialem Spiel die Gewindehülse (56).

Stirnseitig weist die Spindelwelle (50) vorn eine zentrale konische Ausnehmung (55) auf, die zu einer die Spindelwelle (50) in Längsrichtung durchlaufende Stufenbohrung (54) gehört. Auf der Spindelwelle (50) sitzt hinter dem vorderen Lagersitz (52) auf kleinerem Durchmesser ein Auswuchtring (62) per Querpresssitz. Ihm folgt der dem Stator (91) gegenüberliegende Rotor (92). Ein weiterer Auswuchtring sitzt zwischen dem Rotor (92) und dem hinteren Flanschdeckel (47) auf der Spindelwelle (50).

Auf dem hinteren Ende der Spindelwelle (50) ist ein Spanndeckel (64) angeschraubt, der das hintere Schulterlager (48) über dessen Innenring abstützt. Der Spanndeckel (64) ist zugleich ein für die Drehwinkelbestimmung verwendetes Messzahnrad (65).

In der Stufenbohrung (54) der Spindelwelle (50) sitzt im Bereich des Spindelkopfes eine tellerfederbelastete Spannzange (71), deren Zugdorn (72), nach Figur 8, z.B. bis vorn in die Nähe der Stirnfläche (51) der Spindelwelle (50) reicht. Der Zugdorn (72) ist an einer Zugankerschraube (73) befestigt, auf der die Tellerfedern (76) aufgereiht sind. Das hintere Ende der Zugankerschraube (73) bildet einen Tellerfederstempel (74), der hinten in einem Stempelkonus (75) endet. Der Stempelkonus (75) hat beispielsweise einen Kegelwinkel von 16 ± 6 Winkelgraden.

Am hinteren Ende der Arbeitsspindel (40) ist eine Schmiermitteldrehdurchführung (80) zentriert angeordnet. Im Gehäuse (81) der Drehdurchführung (80) sitzt ein hydraulisch betätigbarer Ringkolben (87), an dem zur Spindelwelle (50) hin ein bodenartiger Stützdeckel (88) mit zentraler Bohrung anliegt. Wird die spindelwellenferne Kolbenrückseite mit Hydrauliköl beaufschlagt, legt sich der Stützdeckel (88) am Tellerfederstempel (74) der Spannvorrichtung (70) an, um den Zugdorn (72) in Öffnungsrichtung zu verschieben. Bei einem Umlenken des Hydrauliköldrucks auf die spindelwellennahe Kolbenstangenseite des Ringkolbens (87) läuft der Ringkolben (87) zurück, damit die Spannzange (71) federbelastet wieder in ihre Schließstellung übergehen kann. Um diese Position zu Steuerungszwecken erfassen zu können, ist außen am Stützdeckel (88) ein z.B. scheibenartiger Schaltkragen (89) angeordnet. Letzterer gelangt beim Entspannen der Tellerfedern (76) in den Bereich des am Gehäuse (81) angebauten Näherungsschalters (79).

Das Gehäuse (81) weist einen Deckel (84) auf, der einen zentralen - den Ringkolben (87) führenden - Hohlzapfen (82) trägt. Im verdrehgesicherten Hohlzapfen (82) sitzt wälzgelagert eine hohle Schmiermittelübergabewelle (83), die in die zentrale Bohrung des Tellerfederstempels (74) hineinragt. Die Schmiermittelübergabewelle (83) ist gegenüber der Bohrung des längsverschiebbaren Tellerfederstempels (74) mit mindestens einem Dichtring abgedichtet.

Die rotierende Schmiermittelübergabewelle (83) weist rückseitig eine dicht eingesteckte Dichthülse (85) mit einer axial orientierten Gleitfläche auf. Letztere liegt axial an einer feder- oder druckölbelasteten, längsverschiebbaren Gegenhülse (86) an. Die Gegenhülse (86) weist einen Spritzring auf.

Über diese Gegenhülse (86) wird aus dem Gehäuse (81), den zentralen Hohlräumen der Schmiermittelübergabewelle (83) und der Zugankerschraube (73) das gas- und/oder flüssige Kühl- und/oder Schmiermittel zugeführt. Auf diese Weise kann jede dynamische oder statische Werkzeugaufnahme mit dem geforderten Kühl- und/oder Schmiermittel versorgt werden.

Zwischen der Schmiermitteldrehdurchführung (80) und dem Messzahnrad (65) befindet sich eine am Gehäuse (81) befestigte Sensorträgerplatte (66), die einen berührungslos arbeitenden Sensor (67) zur Positionserfassung trägt, vgl. Figur 8. Der Sensor (67) misst die Entfernung zum Stempelkonus (75) des Tellerfederstempels (74). Mit dem Sensor (67) wird die Längsrichtungsposition der Spannzange (71) gemessen, um deren verschiedene Arbeitspositionen oder auch nicht vorgesehene Arbeitspositionenabweichung erfassen zu können.

Der Magazinrohrkörper (100), vgl. Figur 5, er ist aus einer Aluminiumlegierung gefertigt, hat an seinem Umfang große im Wesentlichen rechteckige, nahezu quadratische Speicherdeckelausnehmungen (141) zur Lagerung von Speicherdeckeln (110), so dass er die Form eines zylindrischen Käfigs hat, der aus zwei stirnseitigen Ringen (102, 103) und z.B. acht, diese verbindenden Längsstreben (104) besteht. Die Längsstreben (104) haben einen in erster Näherung trapezförmigen Querschnitt. Der Querschnitt verjüngt sich nach innen, also zur Mittellinie (2) hin. Die vorderen und hinteren Wandungen der glattwandigen Speicherdeckelausnehmungen (141) liegen in parallelen Ebenen, die z.B. 200 mm voneinander entfernt sind und zudem die Mittellinien (2, 109) senkrecht schneiden. Die seitlichen Wandungen der Speicherdeckelausnehmungen (141) - in Umfangsrichtung gesehen - liegen ebenfalls in zwei parallelen, z.B. 190 mm voneinander entfernt gelegenen Ebenen, wobei diese Ebenen jeweils von der Mittellinie (2) den gleichen kürzesten Abstand haben. Die einzelnen Wandungen einer Speicherdeckelausnehmung (141) gehen in einem Radius von z.B. 15 mm ineinander über.

Der hintere Ring (102) hat eine Breite von z.B. 100 mm, während der vordere Ring (103) bezüglich der Breite 22 mm misst. Demnach beträgt der maximale Abstand zwischen der Werkzeugaufnahmeebene (101) und der Vorderkante des Magazinrohrkörpers (100) 148 mm.

In die Speicherdeckelausnehmungen (141) ragen in Umfangsrichtung jeweils zwei freikragende Abstützzungen (143, 144) um z.B. 35 mm hinein, die sich quer zur Mittellinie (2) bzw. in Umfangsrichtung in Richtung der Mitte der jeweiligen Speicherdeckelausnehmung (141) verjüngen, vgl. Figur 5.

Die z.B. 69 mm breiten Abstützzungen (143, 144) haben beide eine Oberseite (145), in die je zwei Einsenkungen (146) zur Lagerung von Federelementen (139) nebeneinander angeordnet sind. Die Einsenkungen (146) haben hier einen Durchmesser von 32 mm. Die Oberseiten (145) beider Abstützzungen (143, 144) liegen in einer Ebene und sind von der Scheitellinie (142) der jeweiligen Speicherdeckelausnehmung (141) z.B. 62 mm entfernt. Die Abstützzungen (143, 144) sind gegeneinander um 15 mm versetzt, so dass in Figur 5 die obere Abstützzunge (143) von der hinteren Wandung (148) z.B. 73 mm entfernt ist, während die untere Abstützzunge (144) nur einen Abstand von 58 mm hat.

Im Ausführungsbeispiel misst der Außendurchmesser 620 mm bei einer radialen Wandstärke von z.B. 60 mm. Das polare Massenträgheitsmoment des Magazinrohrkörpers (100), einschließlich des Magazinrohrstützdeckels (105), beträgt ohne Speicherdeckel und Werkzeugaufnahmen ca. 13,1 kgm².

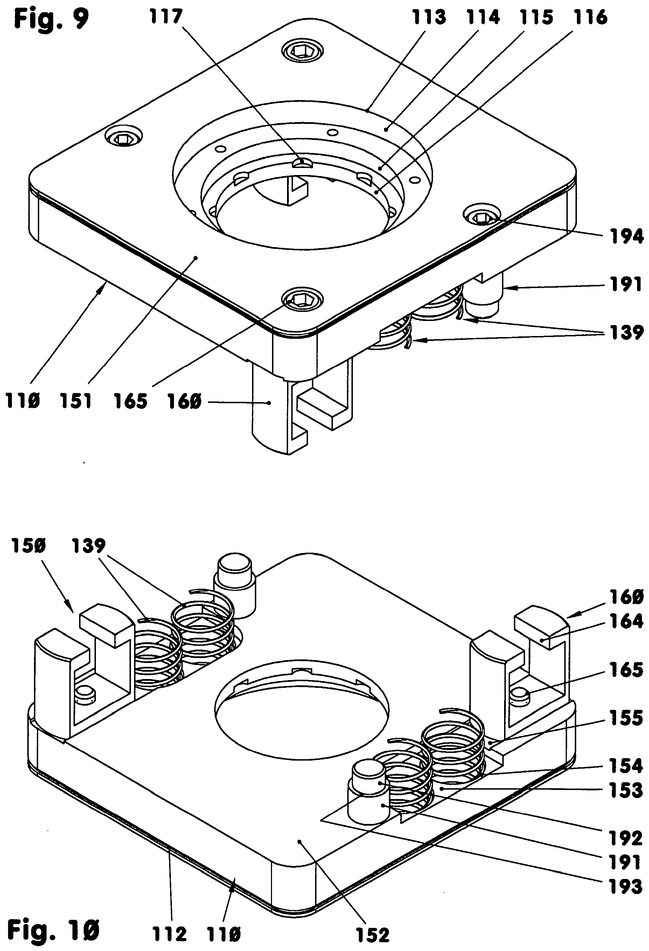

In der jeweiligen Speicherdeckelausnehmung (141), vgl. Figuren 9 und 10, ist ein im Wesentlichen quaderförmiger Speicherdeckel (110) bezüglich der Mittellinie (109) radial bewegbar angeordnet. Er ist aus einer Stahl- oder Aluminiumlegierung gefertigt. Zwischen den Wandungen der Speicherdeckelausnehmung (141) sitzt er mit einem Spiel von 0,1 bis 0,2 mm. In seine seitlichen Außenwandungen ist eine umlaufende Nut (112) eingearbeitet, die einen Dichtring aufnimmt. Der Dichtring verhindert zum einen das Eindringen von Schmutz in den Innenraum (108) und ggf. schützt er zum anderen das Rohrmagazin vor einem größeren Sperrluftdruckabfall.

In der Regel hat der im Magazinrohrkörper (100) sitzende Speicherdeckel (110) stirnseitig, also außen, eine Werkzeugträgerstufenbohrung (113). In dem einzelnen Speicherdeckel (110) ist nach Figur 7 beispielsweise eine dynamische Werkzeugaufnahme (200), eine dynamische Werkzeugaufnahme (230), ein Blinddeckel (370), ein statische Werkzeughalter (380), eine Werkzeugaufnahme (270) für einen halbautomatischen Werkzeugwechsel, ein Werkzeugaggregat (250) und ein statische Werkzeughalter (310) gelagert.

Der Speicherdeckel (110) hat - wie die Speicherdeckelausnehmungen (141) - vier gestuft abgerundete Eckkanten, deren Mittellinien parallel zu den Mittellinien der Werkzeugträgerstufenbohrungen (113) orientiert sind.

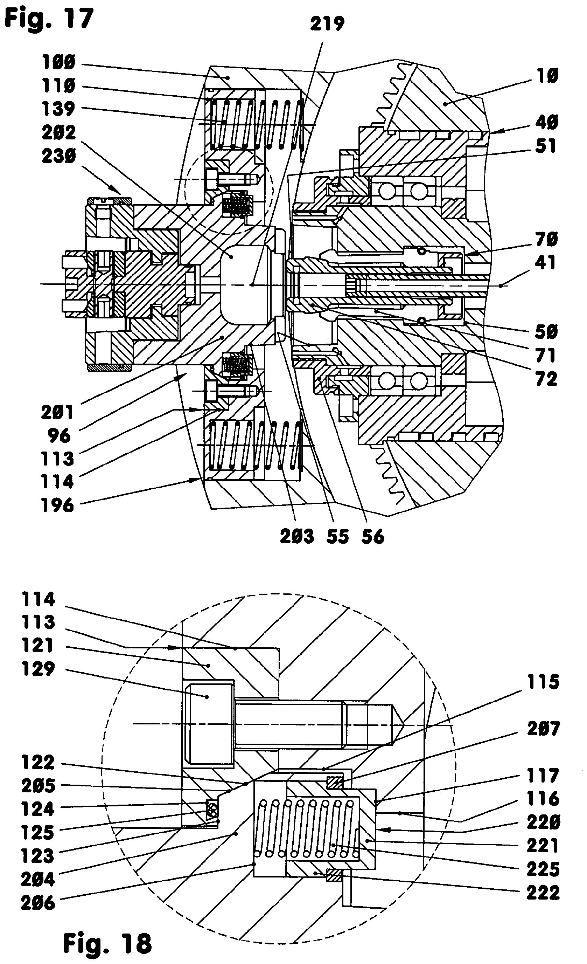

Nach Figuren 9, 18 und 24 stellt die erste Stufe der Werkzeugträgerstufenbohrung (113) eine Plansenkung (114) zur zentrierten Aufnahme z.B. eines Halteringes (121), einer Halteplatte (299, 361) oder eines kleinen Blinddeckels dar. Auf die Plansenkung (114) folgt ein Radialspielabschnitt (115). An Letzterem grenzt abschließend der zylindrische Endabschnitt (116) an, durch den, z.B. bei der Verwendung von dynamischen Werkzeugaufnahmen (200, 230, 250, 270), die Gewindehülse (56) der Spindelwelle (50) mit Spiel hindurchragt. Jeder Endabschnitt (116) hat mindestens drei im Querschnitt zumindest annähernd sichelförmige Teilsenkungen (117), in Figur 9 sind es acht, in die, zumindest bei den dynamischen Werkzeugaufnahmen (200, 230, 250, 270), entsprechende Teilungspositionierelemente (220) eingreifen, vgl. Figur 18. Jede Teilsenkung (117) hat z.B. einen Durchmesser von 10 mm. Der Zylinder, auf dem die Mittellinien der Teilsenkungen (117) um die Mittellinie der Werkzeugträgerstufenbohrung (113) liegen, ist z.B. 4 mm kleiner als der Innendurchmesser des Endabschnitts (116).

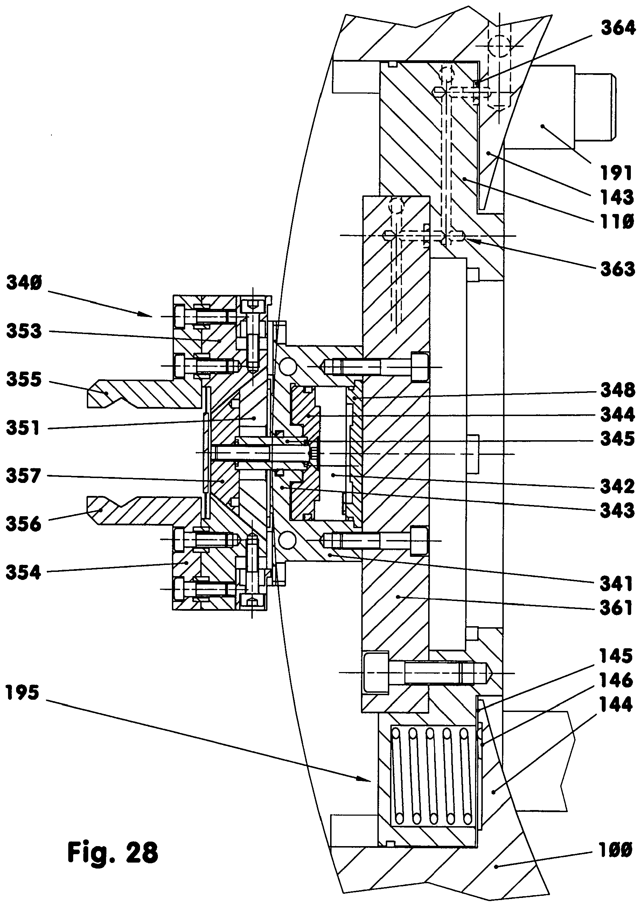

Jeder Speicherdeckel (110) kann über eine gas- und/oder flüssige Kühl- und/oder Schmiermittelzufuhr verfügen, um im Speicherdeckel (110) eingebaute nach außen abstrahlende Kühl- oder Schmiermitteldüsen - zur Kühlung oder Schmierung der Bearbeitungsstelle - zu versorgen. Hierzu wird der Speicherdeckel (110) an dem Magazinrohrkörper (100) oder dem Zentralblock (10) hydraulisch angeschlossen, vgl. Leitungssystem (363) nach Figur 28. Ggf. kann hierfür auch die Zentrier- und Stützeinrichtung (190) oder das Speicherdeckelspannsystem (150) genutzt werden.

Wird ein Werkzeugaufnahmeplatz (131-138) für die Bearbeitung einer größeren Charge nicht benötigt, wird der entsprechende Speicherdeckel (110) durch einen dünnwandigen, leichten Blinddeckel (370) ersetzt, vgl. Figur 7 oben.

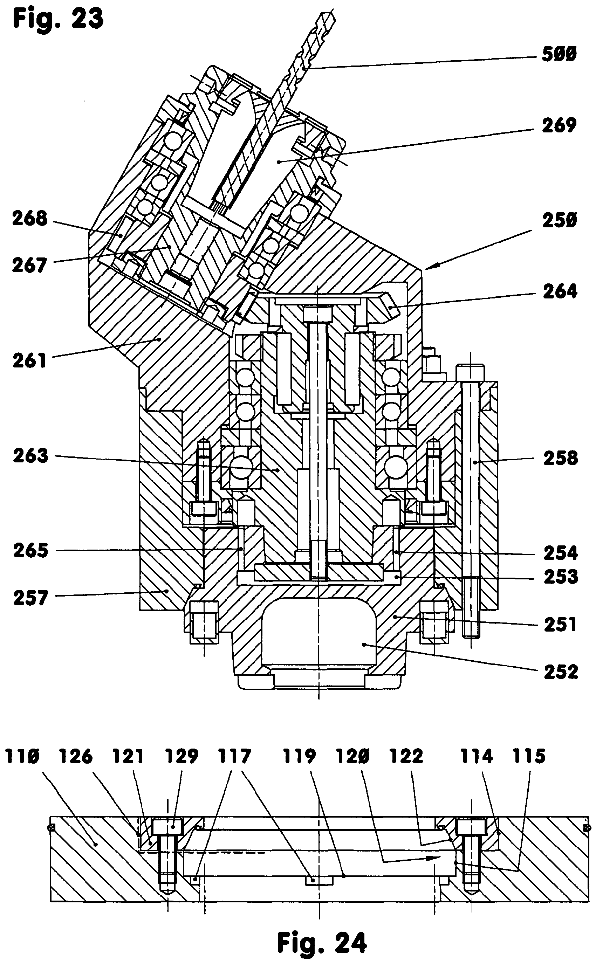

Der am Speicherdeckel (110) mittels Schrauben (129) befestigte Haltering (121), mit dem z.B. bei der dynamischen Werkzeugaufnahme (230) der Werkzeugaufnahmeschaft (201) mit axialem und radialem Spiel gehalten wird, hat im Bereich seiner zentralen Ausnehmung eine konische Senkung (122), deren Kegelwinkel z.B. bei 50 Winkelgraden liegt. Auf dem Grund (123) der Senkung (122) befindet sich eine Umlaufnut (124) mit Hintergriff zur Aufnahme eines Dichtringes (125). Der Haltering (121) bildet zusammen mit dem Speicherdeckel (110) eine umgriffsartige Aufnahmeform (120), vgl. Figur 24, die mit Spiel den jeweiligen Flansch (204) der eingelagerten dynamischen Werkzeugaufnahmen (200, 230, 250, 270) umgibt. Im Wesentlichen wird das Magazinspiel des Flansches (204) durch die konische Senkung (122) und den z.B. planen Fangbund (119) begrenzt.

Zur Befestigung von statischen Werkzeughaltern (310, 340, 380) benötigt der Speicherdeckel (110) nur die Plansenkung (114). Letztere stellt eine flanschartige Aufnahmeform (126) dar, vgl. Figur 24.

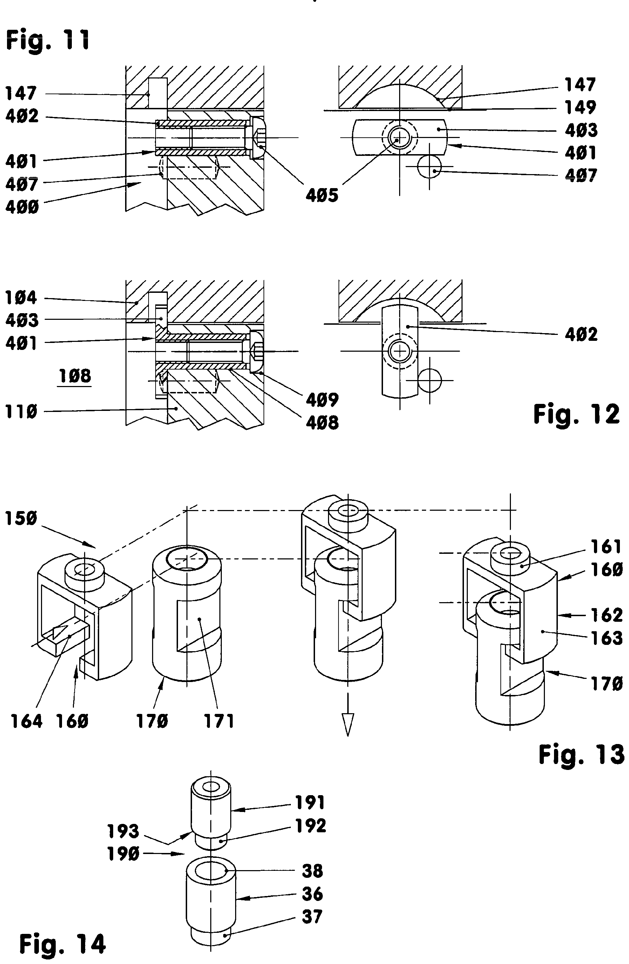

Der Speicherdeckel (110) wird mittels eines Speicherdeckelspannsystems (150) formsteif mit dem Zentralblock (10) schalt- bzw. betätigbar verbunden. Dazu weist die Unter- bzw. Rückseite (152) eines jeden Speicherdeckels (110), vgl. Figur 10, z.B. zwei oder mehr Einzugdoppelhaken (160) auf. Die beiden Einzugdoppelhaken (160), die sich nach Figur 10 z.B. diagonal gegenüberliegen, bestehen jeweils, z.B. als Drehteil, aus einem hohlen Lagerzapfen (161), einer zweiarmigen Gabel (162) und den Hintergriffhaken (164), vgl. Figur 13.

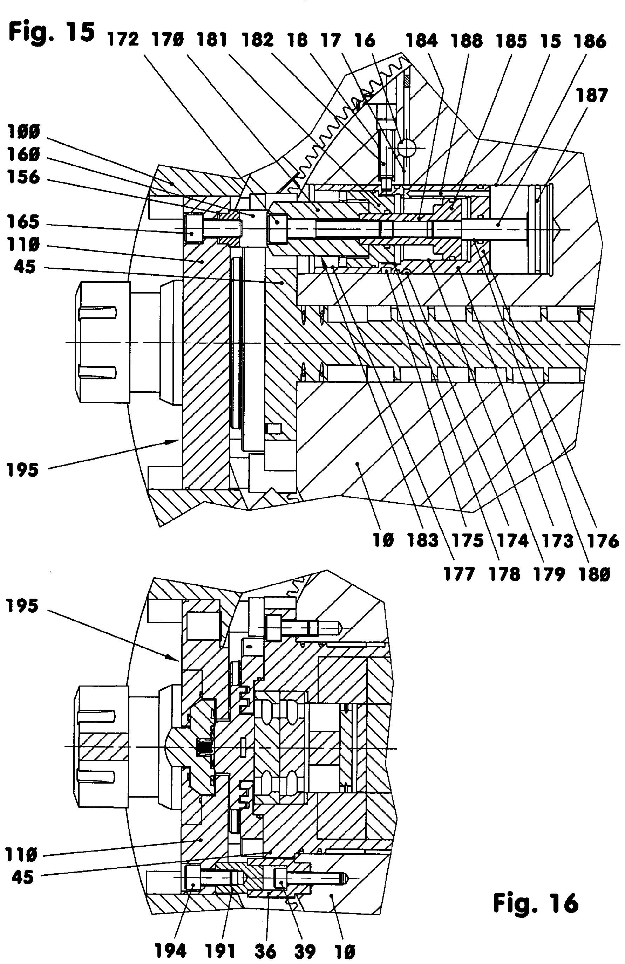

Am zylindrischen Lagerzapfen (161) ist die z.B. zweiarmige Gabel (162) angeformt, die zu ihrem freien Ende hin in den beiden aufeinander zulaufenden Hintergriffhaken (164) endet. Jeder Einzugdoppelhaken (160) sitzt über die Basis der Gabel (162) verdrehsicher in einer Seiteneinfräsung (155). Dabei ragt der Lagerzapfen (161) in eine im Speicherdeckel (110) eingearbeitete Stufenbohrung (156) ein, vgl. Figur 15. In ihr wird er mittels der Schraube (165) gehalten, die in ein Innengewinde des hohlen Lagerzapfens (161) eingreift. Dabei sind die Gabeln (162) bezüglich ihrer quaderförmigen Ausnehmung so orientiert, dass deren durch beide Gabelarme (163) begrenzter Querschnitt in Umfangsrichtung ausgerichtet ist, vgl. Figur 5. Dort sind die Einzugdoppelhaken (160), zwei Stützbolzen (191) und vier Federelemente (139) - ohne den Speicherdeckel (110) - eingezeichnet.

Die Einzugdoppelhaken (160) können auch als einarmige, als T-förmige Haken oder dergleichen ausgebildet sein.

Das jeweilige Gegenstück zu den Einzugdoppelhaken (160) ist jeweils ein Einzugsbolzen (170), vgl. Figuren 13, 15 und 4. Der Einzugsbolzen (170) ist ein Zylinderbolzen mit einer zentralen Durchgangsbohrung, die vorn und hinten jeweils eine Senkung aufweist. Die vordere Senkung, in Figur 13 befindet sie sich oben, dient der Aufnahme des Kopfes einer Zugschraube (172), die den Einzugsbolzen (170) nur beispielhaft mit einem Betätigungsdoppelkolben (183) verbindet, vgl. Figur 15. Die hintere Senkung dient der Zentrierung einer ersten Kolbenstange (184) des Betätigungsdoppelkolbens (183). Im mittleren Bereich weist der Einzugsbolzen (170) beidseitig einander gegenüberliegende Nuten (171) auf. Die Nuten (171), die jeweils rechteckige Querschnitte haben, verlaufen senkrecht zur Mittellinie des jeweiligen Einzugsbolzens (170). Die Böden der beiden Nuten (171) liegen parallel zueinander. Die beiden der Schraubenkopfsenkung zugewandten Nutwandungen liegen in einer Ebene und dienen der Anlage der Hintergriffhaken (164) des jeweiligen Einzugdoppelhakens (160), vgl. Figur 13. Ggf. sind diese Nutwandungen ballig ausgeführt.

Der Einzugsbolzen (170) ist zusammen mit dem Betätigungsdoppelkolben (183) über eine Zylinderbüchse (173) im Zentralblock (10) parallel zur Mittellinie (41) der Arbeitsspindel (40) gelagert, vgl. Figur 15. Die Zylinderbüchse (173) sitzt eingeschoben mit geringem Spiel in einer zylindrischen Sacklochbohrung (15) des Zentralblocks (10). Um sie in axialer Richtung zu fixieren, weist sie an ihrer Außenwandung neben zwei Dichtringe tragenden Nuten und einer Druckmittel verteilenden Umlaufnut (174) noch eine z.B. umlaufende Rechteckkanalnut (175) auf. In die Rechteckkanalnut (175) ragt ein Sperrbolzen (182) hinein, der in einer gestuften Gewindebohrung (18) des Zentralblocks (10) auf Kopfanschlag eingeschraubt ist. Das untere Ende des Sperrbolzens (182) ist ein zylindrischer Arretierzapfen, der mit wenig Spiel in die Rechteckkanalnut (175) eingreift.

Die zentrale Bohrung der Zylinderbüchse (173) ist im Wesentlichen vierstufig ausgeführt, wobei die Durchmesser der einzelnen abgestuften Bereiche zum Zylinderboden (176) hin abnehmen. Der erste abgestufte Bereich dient als Dicht- und Zentriersitz (177) eines ersten Zylinderzwischenbodens (181). Der topfförmige Zylinderzwischenboden (181) sitzt verschraubt im zweiten abgestuften Bereich (178), der ein Innengewinde aufweist. Er hat ebenfalls eine zentrale, mit einer Dichtung ausgestattete Bohrung, die zum Durchführen der z.B. hohlen Kolbenstange (184) des kleineren ersten Kolbens (185) dient. Letzterer (185) liegt mit seiner Kolbendichtung an der Innenwandung des dritten Bereiches (179) an. Die zentrale Bohrung des Kolbens (185) und der Kolbenstange (184) weist auf beiden Seiten ein Innengewinde auf. In dem in Figur 15 links dargestellten Innengewinde sitzt die Zugschraube (172), die den Einzugsbolzen (170) mit der Kolbenstange (184) starr verbindet.

In das in Figur 15 rechts gezeigte Innengewinde des ersten Kolbens (185) ist die Kolbenstange (186) eines zweiten im Durchmesser größeren Kolbens (187) eingeschraubt. Die Kolbenstange (186) durchdringt den vierten Bereich (180) der gestuften Bohrung der Zylinderbüchse (173). Dieser Bereich weist eine Nut mit einer eingelegten Kolbenstangendichtung auf. Der zweite Kolben (187) hat als Zylinderwandung die Wandung der Sacklochbohrung (15).

Im Zentralblock (10) wird über eine Längsleitung (16) und eine Querleitung (17) der Umlaufnut (174) Druckmittel zugeführt, um von der Umlaufnut (174) aus über mindestens eine Radialbohrung in den vor die Kolbenstangenseite des ersten Kolbens (185) gelegenen Druckraum zu gelangen. In eine oder mehrere Radialbohrungen münden zylinderseitige Längsbohrungen (188), über die das Druckmittel ebenfalls in den vor dem zweiten Kolben (187) angeordneten Druckraum strömen kann. Bei einer Druckbeaufschlagung der beschriebenen Bohrungen wird der Einzugdoppelhaken (160) über den Einzugsbolzen (170) in Richtung Zentralblock (10) gezogen. Die aufgebrachte Haltekraft beträgt im Ausführungsbeispiel ca. 6 kN pro Einzugsbolzen.

Die Druckmittelleitungen, über die die Kolbenbodenseiten der Kolben (185, 187) zum Lösen belastet werden, sind in vergleichbarer Weise angelegt, jedoch hier nicht dargestellt.

Im Speicherdeckel (110) sind die Einzugdoppelhaken (160) mit dem zylindrischen Lagerzapfen (161) voraus eingesetzt und verschraubt. Nach Figur 10 mündet die Seiteneinfräsung (155) in eine mehrere Millimeter tiefe, im Wesentlichen rechteckige Längseinfräsung (153), deren Breite größer als 35,2 mm ist, während ihre Länge mehr als 69,2 mm misst. In der Längseinfräsung (153) sind zwei nebeneinanderliegende Sacklochbohrungen (154) eingearbeitet, deren Durchmesser z.B. 32 mm beträgt. Die Tiefe der Sacklochbohrung (154) ist so ausgelegt, dass die verbleibende Wandstärke im Bereich des Bohrungsbodens z.B. 2 mm beträgt. In jeder Sacklochbohrung (154) lagert ein Federelement (139), z.B. in Form einer Schraubendruckfeder.

Bei einem im Magazinrohrkörper (100) eingebauten Speicherdeckel (110) liegen die einzelnen Sacklochbohrungen (154) des Speicherdeckels (110) gegenüber den jeweiligen Einsenkungen (146) der magazinrohrkörperseitigen Abstützzungen (143, 144).

An die Stelle des beschriebenen Speicherdeckelspannsystems kann auch ein Spannsystem verwendet werden, das als Spanner im Zentralblock (10) einen um seine Mittellinie rotierbaren Gewindebolzen aufweist, der im Speicherdeckel (110) - zum Festklemmen desselben - in eine Gewindebohrung einschraubbar ist. Bei Betätigung schraubt sich das vordere Gewindeende des Spanners aus dem Zentralblock (10) heraus, um sich in die Gewindebohrung des Speicherdeckels (110) hineinzuschrauben und diesen dabei zentrierend gegen Anschläge am Zentralblock (10) zu ziehen.

Neben jeder Längseinfräsung (153) ist an der Unterseite (152) des einzelnen Speicherdeckels (110) - in der Nähe der in Umfangs- oder Umlaufrichtung orientierten Wandung des Speicherdeckels (110) - ein Stützbolzen (191) als Teil einer Zentrier- und Abstützeinrichtung (190) angeordnet. Er sitzt dazu in einer Senkbohrung, in die er zentriert z.B. 8 mm tief hineinragt, vgl. Figur 16. In der in der Senkbohrung eingebauten Stirnseite des Stützbolzens (191) befindet sich ein Innengewinde, über das der Stützbolzen (191) im Speicherdeckel (110) mittels einer Schraube (194) befestigt ist.

Der Stützbolzen (191), vgl. Figur 14, weist an seinem freien Ende einen Zentrierzapfen (192) auf, der z.B. bei einer Länge von 10 mm einen Durchmesser hat, der 4 mm kleiner ist als der maximale Durchmesser des Stützbolzens (191). Der Übergang zwischen dem Stützbolzen (191) und dem Zentrierzapfen (192) ist als feinbearbeiteter, planer Anlagebund (193) ausgeführt. Für ein vereinfachtes Einzentrieren kann der Zentrierzapfen (192) eine Einführfase aufweisen.

Der Stützbolzen (191) ist ebenfalls ein Teil einer Zentrier- und Abstützeinrichtung (190) des Rohrmagazins (1). Über die Summe der einzelnen Stützbolzen (191), deren Anzahl pro Speicherdeckel (110) entgegen dem Ausführungsbeispiel größer als zwei sein kann, stützt sich der Speicherdeckel (110) präzise, wiederholgenau und formsteif am Zentralblock (10) ab. Die Wiederholgenauigkeit von Andocken zu Andocken liegt beim Ausführungsbeispiel in Spindellängsrichtung und quer dazu bei 5 ± 2 um.

Die Stützbolzen (191) stützen sich beim Andocken jeweils an einer am Zentralblock (10) starr befestigten Stützhülse (36) ab, vgl. Figuren 13 und 15. Die Stützhülse (36) hat im hinteren Bereich eine Zentriereindrehung (37), mit der sie zentriert in einer mit Innengewinde versehenen Senkbohrung im Zentralblock (10) angeordnet ist. Zentral weist sie eine gestufte Durchgangsbohrung auf, deren vorderer Bereich (38) den Zentrierzapfen (192) des Stützbolzens (191) zentrierend aufnimmt. Der vordere Bereich (38) ist so tief, dass er auch den Kopf der Schraube (39) aufnehmen kann, mit der die Stützhülse (36) am Zentralblock (10) befestigt ist.

Um den einzelnen Speicherdeckel (110) in seiner Magazinposition (196) gegen die Wirkung der Federelemente (139) oder eines Gasüberdruck im Innenraum (108) positionieren zu können, sind in jedem Speicherdeckel (110) zwei, drei oder mehr Schwenkriegelsysteme (400) eingebaut. Vorzugsweise sind sie im Bereich der Speicherdeckelwandungen angeordnet, die die Längsstreben (104) des Magazinrohrkörpers (100) kontaktieren. Das einzelne Schwenkriegelsystem (400) besteht aus einem T-förmigen Anschlagriegel (401), einer Fixierschraube (405) und einem Anschlagbolzen (407), vgl. Figuren 11 und 12.

Der T-förmige Anschlagriegel (401) umfasst ein Rohr (402), an dem ein Querbalken (403) angeformt ist. Die Breite des Querbalkens (403) entspricht dem Durchmesser des Rohres (402). Der Querbalken (403) überragt beidseitig das Rohr (402) um eine Länge, die z.B. dem Rohrdurchmesser entspricht. Das Rohr (402) hat hier ein durchgehendes Innengewinde. Der Anschlagriegel (401) sitzt mit geringem Spiel in einer gestuften Senkbohrung (408) des Speicherdeckels (110). Im Bohrungsbereich liegt der Anschlagriegel (401) mit seiner zylindrischen Wandung mit geringem Spiel geführt an. Die zylindrische Wandung des Anschlagriegels (401) endet einige zehntel Millimeter vor dem Boden der Senkung (409), auf dem der Kopf der Fixierschraube (405) aufliegt.

Die Figur 11 zeigt das Schwenkriegelsystem (400) im geöffneten Zustand. Wenn alle Anschlagriegel (401) in dieser Offenstellung stehen, kann der Speicherdeckel (110) radial bezüglich der Mittellinie (109) aus der Speicherdeckelausnehmung (141) genommen werden. Der Speicherdeckel (110) wird durch die Federelemente (139) herausgeschoben. In diesem Fall ist die jeweilige Fixierschraube (405) z.B. um ein- bis zwei Drehungen gelockert, siehe Figur 11 links, und der Querbalken (403) liegt parallel zur Arbeitsfuge (149) des Speicherdeckels (110). In der rechten Unteransicht, nach Figur 11, steht der Querbalken (403) an dem Anschlagbolzen (407) an, was sich beim Lösen der einzelnen Fixierschraube (405) automatisch ergibt.

Soll der Speicherdeckel (110) nach dem Einsetzen in die Speicherdeckelausnehmung (141) verriegelt werden, wird der Speicherdeckel (110) gegen die Abstützzungen (143, 144) gepresst.

Die Fixierschrauben (405) werden, z.B. über Kreuz, nacheinander angezogen. Durch die dabei eingeleitete Rechtsdrehung der jeweiligen Fixierschraube (405) dreht sich der Anschlagriegel (401) nach rechts, um das der Arbeitsfuge (149) nächstgelegene Ende des Querbalkens (403) in eine im Magazinrohrkörper (100) eingearbeitete Hintergriffsnut (147) einzudrehen. Um in der eingeschwenkten Position, trotz einem weiteren Anziehen der Fixierschraube (405) zu bleiben, legt sich der Querbalken (403) wiederum am Anschlagbolzen (407) an, vgl. Figur 12. Nach dem Festziehen der einzelnen Fixierschraube (405) kontaktiert der Querbalken (403) unter der Last der Federelemente (139) die dem Innenraum (108) abgewandte Nutflanke der Hintergriffsnut (147).

Da die Fixierschrauben (405) von der Außenseite des jeweiligen Speicherdeckels (110) zugänglich sind, können die Speicherdeckel (110) ohne ein weiteres Demontieren des Rohrmagazins (1), z.B. zu Wartungszwecken, ausgebaut werden.

Die Speicherdeckel (110) können sich in ihrer Magazinposition (196) zusätzlich oder alternativ zur Feder- oder Gasdruckpositionierung beispielsweise elektromechanisch, pneumatisch oder hydraulisch fixiert bzw. gesichert werden. So ist es möglich, z.B. in die Ringe (102, 103) elektromagnetische Hubzylinder einzubauen. Dabei sind deren Hubstempel so ausgerichtet, dass ihre Mittellinien parallel zur Mittellinie (109) orientiert sind. Zum Arretieren der einzelnen Speicherdeckel (110) in der Magazinposition (196) werden pro Speicherdeckel (109) z.B. drei Hubstempel ausgefahren, die dann in entsprechende Bohrungen des Speicherdeckels (110) fixierend eingreifen. Sind die im ihren Hubzylindern geführten Hubstempel zusätzlich mit einem Rastsystem ausgestattet, das die Hubstempel in ihrer ausgefahren Position im Hubzylinder verrasten kann, so lassen sie die Hubstempel in ihren Endlagen stromlos halten.

Im Speicherdeckel (110) werden die dynamischen Werkzeugaufnahmen (200, 230, 250, 270) gelagert, sofern sich ihre Werkzeuge (500) in einer Magazinposition befinden. Eine einfache dynamische Werkzeugaufnahme (200), vgl. Figuren 7 und 8, umfasst u.a. einen Werkzeugaufnahmeschaft (201) der - nach dem Einspannen in die Spindelwelle (50) - mit seinem Konus (203) in die konische Ausnehmung (55) der Spindelwelle (50) mittels der Spannvorrichtung (70) eingezogen wird. Der Werkzeugaufnahmeschaft (201) hat dazu eine zentrale Ausnehmung (202) mit Hintergriff. Hinter Letzterem verkrallt sich die Spannzange (71) der Spannvorrichtung (70).

Der Werkzeugaufnahmeschaft (201) weist außen im hinteren Bereich einen Flansch (204) auf, vgl. Figur 18, mit dem er - auch ohne an der Spindelwelle (50) angekuppelt zu sein - in der entsprechenden Ausnehmung (113) des Speicherdeckels (110) fixiert ist. Der großteils zylindrische Flansch (204) ist vorderseitig angefast, so dass dort eine kegelstumpfmantelförmige Zentrierfläche (205) entsteht. Ihr Kegelwinkel entspricht dem Kegelwinkel der konischen Senkung (122) des Halterings (121). In der rückseitigen Stirnfläche des Flansches (204) befinden sich mindestens zwei Sacklochbohrungen (206), in der Regel können es auch 16 oder mehr sein, mit z.B. einem planen Bohrungsgrund, vgl. Figur 18. In jeder Sacklochbohrung (206) sitzt gleitfähig ein topfförmiges, z.B. eine Schraubendruckfeder (225) oder ein mehrere Tellerfedern lagerndes Teilungspositionierelement (220). Das Teilungspositionierelement (220) ist in der Sacklochbohrung (206) so eingesetzt, dass sein Boden (221) zur Spindelwelle (50) hin orientiert ist. Die Schraubendruckfeder (225) versucht hierbei, das Teilungspositionierelement (220) aus der Sacklochbohrung (206) herauszudrücken. Um ein Herausfallen der Teilungspositionierelemente (220) zu verhindern, haben diese einen Kragen (222), mit dem sie sich an den Bohrungsrändern eines am Flansch (204) rückseitig angeschraubten Anschlagringes (207) abstützen. Die Bohrungsränder gehören zu den Bohrungen, aus denen die Teilungspositionierelemente (220) herausragen, vgl. Figur 18. Anstelle des Anschlagringes (207) können auch kurze Laschen verwendet werden, die jeweils beidseits der einzelnen Sacklochbohrung (206) - in Umfangsrichtung des Bohrbildes - mit dem Flansch (204) verschraubt sind.

Nach Figur 18, vgl. auch Figur 9, liegen die sichelförmigen Teilsenkungen (117) des Speicherdeckels (110) koaxial gegenüber den Sacklochbohrungen (206), so dass die Teilungspositionierelemente (220) in den Teilsenkungen (117) zumindest radial anliegen. Dadurch ist der Werkzeugaufnahmeschaft (201) zum einen verdrehsicher im Magazinrohrkörper (100) positioniert und zum anderen drücken die Schraubendruckfedern (225) den Flansch (204) über die Teilungspositionierelemente (220) zentrierend an den Haltering (121). Zugleich wird die vordere, plane Stirnfläche des Flansches (204) gegen den Dichtring (125) gepresst. Der Grund (123) der Senkung (122) hat gegenüber der vorderen, planen Stirnfläche des Flansches (204) ein geringes Spiel.

Der Innenraum (108) des mehrteiligen Magazinrohrkörpers (100, 105) ist gegenüber der Umgebung weitgehend abgedichtet und steht unter 0,5 x 10⁵ Pa Sperrluftüberdruck. Die Sperrluft drückt die Werkzeugaufnahmen (200, 230, 250, 270) zusätzlich in die konischen Zentrierungen der Halteringe (121).

Gemäß der Figuren 7 und 8 weist der Werkzeugaufnahmeschaft (201) der einfachen, dynamischen Werkzeugaufnahme (200) außerhalb des Magazinrohrkörpers (100) z.B. eine zentrale konische Ausnehmung (211) auf, in der eine Spannzange (212) zum Spannen eines Spiralbohrers (500) oder dergleichen eingesetzt ist.

In den Figuren 17 bis 22 wird das Spannen einer dynamischen Werkzeugaufnahme (230) in der Spindelwelle (50) schrittweise dargestellt. Die Figur 17 zeigt den Magazinrohrkörper (100) in seiner Rotationsposition. Der Speicherdeckel (110) befindet sich noch in seiner Magazinposition (196). Um zu der dargestellten Position zu gelangen, kann er eine 360-Winkelgradrotation um die Mittellinie (2) und/oder (109) durchgeführt haben, ohne den Zentralblock (10) oder die Arbeitsspindel (40) berührt zu haben. In der dargestellten Position fluchten die Mittellinien (219, 41) der Werkzeugaufnahme (230) und der Arbeitsspindel (40). Der Zugdorn (72) der Spannvorrichtung (70) steht mehrere zehntel Millimeter vor der Öffnung des Werkzeugaufnahmeschafts (201) der Werkzeugaufnahme (230). Die Hakenzungen der Spannzange (71) liegen am Schaft des nach vorn geschobenen Zugdorns (72) an.

Nach Figur 18 liegt die kegelstumpfmantelförmige Zentrierfläche (205) des werkzeugaufnahmeseitigen Flansches (204) an der kegelstumpfmantelförmigen Fläche der Senkung (122) des Halterings (121) dicht an. Die Teilungspositionierelemente (220) schmiegen sich formschlüssig in den Teilsenkungen (117) des Speicherdeckels (110) an.

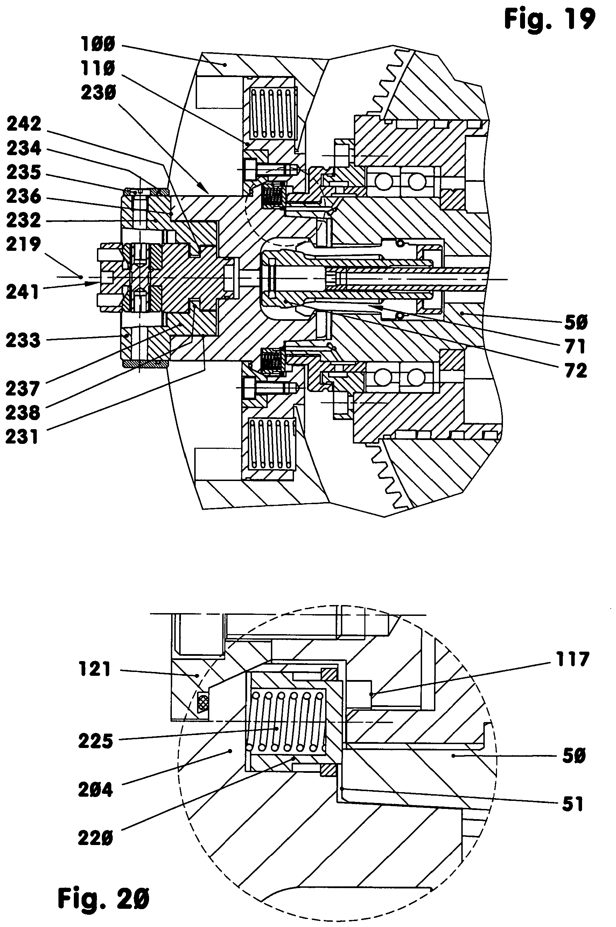

Gemäß Figur 19 wurde der Speicherdeckel (110) zusammen mit der Werkzeugaufnahme (230) in einem Hub, von z.B. 22 mm, auf die Spindelwelle (50) zubewegt. Die Spannzange (71) und der Zugdorn (72) ragen in die Hintergriffsausnehmung (202) des Werkzeugaufnahmeschafts (201) hinein, jedoch ohne die Spannzange (71) gespannt zu haben. Nach Figur 20 liegt weder die Stirnfläche (51) der Spindelwelle (50) am Flansch (204) an, noch berührt die Wandung der konischen Ausnehmung (55) den Außenkonus (203) des Werkzeugaufnahmeschafts (201).

Zugleich wurden die Teilungspositionierelemente (220) durch den Kontakt mit der Stirnfläche (51) gegen die Wirkung der Schraubendruckfedern (225) in eine hintere Position geschoben, so dass sie nicht mehr in die Teilsenkungen (117) des Speicherdeckels (110) eingreifen. Die Verdrehsicherung der Werkzeugaufnahme (230) gegenüber dem Speicherdeckel (110) ist aufgehoben.

Der Flansch (204) hat seine Position gegenüber dem Haltering (121) beim Übergang von Figur 18 zu Figur 20 nicht geändert.

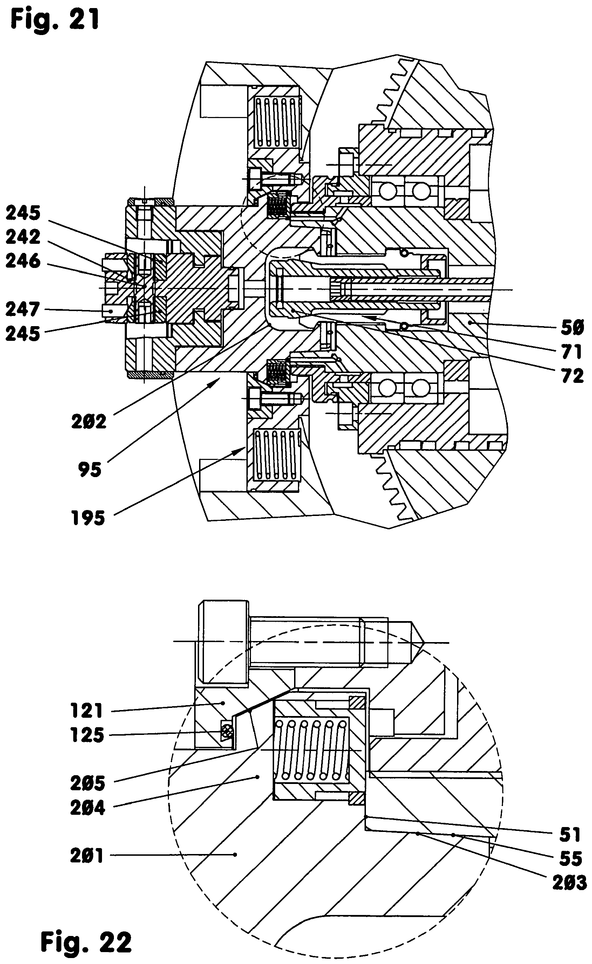

Nach Figur 21 wurde der Zugdorn (72) in die Spindelwelle (50) hineingezogen. In der Folge haben sich die Hakenzungen der Spannzange (71) am Hintergriff der Ausnehmung (202) angelegt und gespreizt. Aufgrund der Keilwirkung der Spannzange (71) im Hintergriffsbereich wird die Werkzeugaufnahme (230) wenige zehntel Millimeter gegen die Stirnfläche (51) der Spindelwelle (50) gezogen. Dabei kontaktiert die Wandung der konischen Ausnehmung (55) den Außenkonus (203) des Werkzeugaufnahmeschafts (201). Ferner legt sich der Flansch (204) an der Stirnfläche (51) an.

Durch das Zurückziehen der Werkzeugaufnahme (230) in Richtung Spindelwelle (50) um z.B. 0,3 bis 0,5 mm, löst sich der Flansch (204) ringsherum, vgl. Figur 22. Er liegt nun weder am Haltering (121) noch am Speicherdeckel (110) an. Auch der Dichtring (125) kontaktiert den Flansch (204) nicht. Die Werkzeugaufnahme (230) ist somit gegenüber dem Speicherdeckel (110) frei beweglich. Der Magazinrohrkörper (100) hat nun weder eine Trage- noch eine Führungsposition. Der zwischen der Werkzeugaufnahme (230) und dem Speicherdeckel (110) vorhandene Spalt hat die Funktion einer Labyrinthdichtung, über die geringe Volumina Sperrluft - zur Vermeidung von eindringendem Kühl- und/oder Schmiermittel oder sonstigem Schmutz - entweicht.

Die dynamische Werkzeugaufnahme (230) mit integriertem Handspanner, vgl. Figuren 17, 19, 21, umfasst einen Werkzeugaufnahmeschaft (201). Letzterer hat in der äußeren Stirnseite eine zentrale Stufenbohrung (231). In dem großen Bohrungsabschnitt mit dem größten Durchmesser ist eine Konushülse (232) eingesetzt.

Die Konushülse (232) ist ein gestufter rohrförmiger Körper mit einem Konusabschnitt (233) und einem Bajonettabschnitt (237). Die konische Innenwandung des Konusabschnitts (233) dient der Werkzeugaufnahme. Auf der radialen Außenwandung des Konusabschnitts (233) ist ein um mehrere Winkelgrade verstellbarer Ringdeckel (234) geführt. Zur Führung an der Konushülse (232) hat er z.B. zwei Führungslanglöcher, vgl. Figur 3. In Letztere ragen die Köpfe der Führungsschrauben (235) hinein.

Der Bajonettabschnitt (237) ragt mit einem mehrere zehntel Millimeter großen Spiel in den großen Bohrungsabschnitt der Werkzeugaufnahme (230) hinein. Die im Wesentlichen zylindrische Innenwandung trägt mindestens einen Bajonettsteg (238) zur Fixierung eines Handspanneinsatzes (241).

Die Konushülse (232) liegt über ihren Planbund (236) an der äußeren Stirnseite des Werkzeugaufnahmeschafts (201) auf. Dort ist sie mit parallel zur Mittellinie der Werkzeugaufnahme (230) ausgerichteten Schrauben befestigt. Im großen Bohrungsabschnitt befinden sich mindestens drei äquidistant am Umfang verteilte Gewindestifte tragende Gewindebohrungen. Mit den Gewindestiften wird die Konushülse (232) - zur Optimierung des Werkzeugrundlaufs - radial gegenüber der Mittellinie der Werkzeugaufnahme (230) ausgerichtet.

In der zylindrischen Innenwandung des Bajonettabschnitts (237) umgreift der Handspanneinsatz (241) die Bajonettstege (238). Der Handspanneinsatz (241), vgl. Figur 19, ist ein bolzenförmiger Körper, der an seinem hinteren Ende z.B. zwei Stege zum Hintergreifen der Bajonettstege (238) der Konushülse (232) aufweist. Im mittleren Bereich hat er zwei einander gegenüberliegende Quernuten (242). In jeder Quernut (242) sitzt ein Spannbacken (245). Jeder Spannbacken (245) hat in seinem normal zur Mittellinie (219) der Werkzeugaufnahme (230) gelegenen Querschnitt die Form eines Kreisabschnitts.

In dem zwischen den Quernuten (242) liegenden Steg befindet sich eine Querbohrung, in die ein Sondergewindebolzen (246) eingelegt ist. Koaxial zu dieser Querbohrung befinden sich in den Spannbacken (245) entsprechende Gewindebohrungen. Der Sondergewindebolzen (246) trägt auf der einen Seite ein Rechtsgewinde und auf der anderen ein Linksgewinde. Jedes Gewinde ragt in einen Spannbacken (245) hinein. Der Sondergewindebolzen (246) hat stirnseitig z.B. eine Werkzeugausnehmung für einen Inbus-Schraubendreher.

Durch ein Verdrehen des Sondergewindebolzens (246) werden die Spannbacken (245) synchron zueinander aus- oder eingefahren. Jeder Spannbacken (245) weist zudem eine Keilfläche auf, an der je ein Ausdrückstift (247) mit seiner Keilfläche anliegt. Die Ausdrückstifte (247), die parallel zur Mittellinie der Werkzeugaufnahme (230) orientiert sind, ragen bei zusammengefahrenen Spannbacken (245) aus der Stirnseite des Handspanneinsatzes (241) heraus.

Zum manuellen Spannen des Werkzeuges mit HSK-Werkzeugschaft wird das Werkzeug an der konischen Innenwandung des Konusabschnittes (233) angelegt. Durch ein entsprechendes Verdrehen des Ringdeckels (234) und des Werkzeuges werden eine Werkzeugausnehmung des Sondergewindebolzens (246), eine Bohrung des HSK-Werkzeugschafts und eine Bohrung des Ringdeckels (234) zur Deckung gebracht. Mit einem anschließenden Drehen des Sondergewindebolzens (246) werden die Spannbacken (245) gegen die Innenkontur der Hintergriffsausnehmung des HSK-Werkzeugschafts gepresst. Das Werkzeug sitzt nun fest in der Werkzeugaufnahme (230).

Diese Werkzeugaufnahme (230) ermöglicht eine freie Schnittstellenwahl. Beispielsweise können HSK®-, Capto®-, BENZ Solidfix®-Schnittstellen und dergleichen realisiert werden.

In Figur 23 ist ein auswechselbares Werkzeugaggregat (250) gezeigt. Das Werkzeugaggregat (250), das zur Gruppe der dynamischen Werkzeugaufnahmen gehört, nimmt in einer Spannzange (269) einen Spiralbohrer (500) auf, dessen Mittellinie um 30 Winkelgrade gegenüber der Mittellinie der Antriebswelle (263) geneigt ist.

Das Werkzeugaggregat (250) lagert in einem Aggregategehäuse (261) wälzgelagert die Antriebswelle (263) und eine die Spannzange (269) tragende Abtriebswelle (267). Die Antriebswelle (263) treibt über ein Kronenrad (264) ein Stirnrad (268) der Abtriebswelle (267) an. Alternativ zu dem aus dem Kronenrad (264) und dem Stirnrad (268) bestehenden Winkeltrieb können auch andere Winkelgetriebe verwendet werden, bei denen beispielsweise paarweise Kegelräder oder Schraubräder zum Einsatz kommen. Auch Schneckenradsätze oder Kegel-Schraubräderpaare sind denkbar.

Das Aggregategehäuse (261) ist über einen rohrförmigen Haltering (257) mittels der Schrauben (258) mit dem entsprechenden Speicherdeckel (110) verschraubt, vgl. Figur 7. Der vom rohrförmigen Haltering (257) und dem Speicherdeckel (110) umgriffene Werkzeugaufnahmeschaft (251) hat gegenüber seiner HSK-Ausnehmung (252) eine mit einer Innenkerbverzahnung (254) versehene Bohrung (253). Diese Innenkerbverzahnung (254) greift in eine an der Antriebswelle (263) befestigte Außenkerbverzahnung (265) ein.

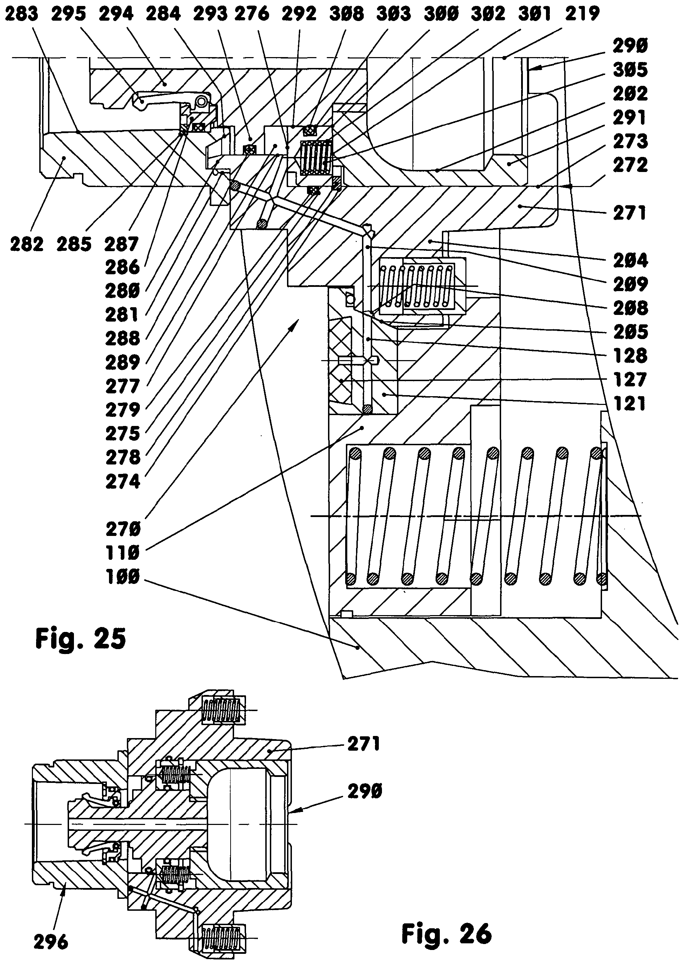

In den Figuren 25 und 26 ist eine dynamische Werkzeugaufnahme (270) gezeigt, mit dem halbautomatisch ein Werkzeug, das z.B. eine HSK-Schnittstelle (296) aufweist, eingesetzt und vorgespannt werden kann.

Die Werkzeugaufnahme (270) hat einen Werkzeugaufnahmeschaft (271). Der Außenkonus (203), der Flansch (204), der Haltering (121) und die Teilungspositionierelemente (220) sind schon aus den zuvor beschriebenen dynamischen Werkzeugaufnahmen (200, 230) bekannt. Allerdings hat hier der Werkzeugaufnahmeschaft (271) spindelwellenseitig eine zentrale Stufenbohrung (272), in der ein mehrteiliger Spannadapter (290) geführt ist. Die Stufenbohrung (272) hat eine Spannhülsenführzone (273) und eine im Durchmesser kleinere Zylinderzone (277). Der mehrteilige Spannadapter (290) besteht aus einer Spannhülse (291), einem Kolbenstangenabschnitt (292), einem Kolben (293) und einem Spannzangenhalteabschnitt (294). Die Spannhülse (291) umfasst die mit dem Hintergriff versehene Ausnehmung (202). Mit ihrer Außenkontur ist sie mit geringem Spiel in der Stufenbohrung (272) geführt.

An die Spannhülse (291) schließt sich der z.B. eingeschraubte Kolbenstangenabschnitt (292) an. Auf letzterem sitzt ein Vorspannring (300), dessen radiale Außenwandung an der Spannhülsenführzone (273) anliegt. Zudem stützt sich der Vorspannring (300) an der zwischen der Spannhülsenführzone (273) und der Zylinderzone (277) gelegenen Planfläche (276) ab. Der Vorspannring (300) wird axial in dieser Position durch einen Sicherungsring (278) gehalten, der in einer in der Spannhülsenführzone (273) angeordneten Sicherungsringnut (274) sitzt. Zwischen der Sicherungsringnut (274) und der Planfläche (276) befindet sich eine Dichtungsringnut (275), in der ein O-Ring (279) angeordnet ist. Um den Vorspannring (300) auch gegenüber dem Kolbenstangenabschnitt (292) abzudichten, trägt der Vorspannring (300) in seiner radialen Außenwandung in einer Ringnut (303) einen O-Ring (308).

Der Vorspannring (300) weist in seiner der Spannhülse (291) zugewandten Stirnfläche (301) eine Vielzahl von Sacklochbohrungen (302) auf. In jeder Sacklochbohrung (302) sitzt eine Schraubendruckfeder (305), die sich an der Spannhülse (291) abstützt.

Nach Figur 25, die die halbautomatische Werkzeugaufnahme (270) in pneumatisch entspanntem Zustand ohne eingesetzte HSK-Werkzeugschaft zeigt, liegt die Spannhülse (291) am Vorspannring (300) an. Alle Schraubendruckfedern (305) sind komprimiert.

Am vorderen Ende des Kolbenstangenabschnitts (292) befindet sich der Kolben (293), der gegenüber der Zylinderzone (277) mittels eines O-Ringes abgedichtet ist. An der Rückseite des Kolbens (293), sie ist dem Vorspannring (300) zugewandt, liegt Druckluft an. Im Ausführungsbeispiel wird die Druckluft mittels einer Druckluftblaspistole über einen im Haltering (121) sitzenden Elastomeradapter (127) in ein System (128) aus mehreren Bohrungen gepumpt. Von dort aus gelangt die Druckluft in den zwischen dem Haltering (121) und dem Flansch (204) gelegenen Konussitz. Die kegelstumpfmantelförmige Zentrierfläche (205) weist in dem Bereich, in dem das System (128) endet, eine umlaufende Ringnut (208) auf, die mit einem weiteren System (209) aus Bohrungen in Wirkverbindung steht. Dieses System hat eine Bohrung (209), die in den rückwärtigen Zylinderraum (289) der Zylinderzone (277) mündet. Die über das System (209) eingebrachte Druckluft schiebt den Spannadapter (290) in Figur 26 nach links.

Links vom Kolben (293) erstreckt sich der Spannzangenhalteabschnitt (294). Letzterer hat eine Taille, um die eine mehrteilige Spannzange (295) mit ihren Hakenzungen angeordnet ist. Zum freien Ende hin weitet sich der Spannzangenhalteabschnitt (294) kegelstumpfartig auf, um mittels der kegelstumpfmantelförmigen Fläche die Spannzange (295) aufweiten zu können.

Um die Spannzange (295) herum sitzt eine Konushülse (282). Sie weist rückseitig eine Zentrierstirnnut (284) auf, in die ein an der vorderen Stirnseite des Werkzeugaufnahmeschafts (271) angeordneter Ringsteg (280) mit einem Zentrier- und Außengewindeabschnitt (281) zentrierend und fixierend eingreift.

Zum Spannadapter (290) hin hat die Konushülse (282) einen Innenkonus (283) zur Lagefixierung der zweiten Schnittstelle. Im hinteren Bereich der Konushülse (282) sitzt ein Positionierring (286), der durch einen in einer Ringnut (285) eingeschnappten Sicherungsring (287) nach vorn axial gesichert ist. Der Positionierring (286) umgreift die Fangnasen der Hakenzungen der Spannzange. Er ist gegenüber dem Innenkonus (283) mittels eines O-Ringes (288) abgedichtet.

Bei dieser Werkzeugaufnahme (270) kann bei laufender Werkstückbearbeitung am Rohrmagazin (1) ein einzelnes Werkzeug vom Bediener ausgewechselt werden, sofern sich der Speicherdeckel (110) dieses Werkzeugs an einer gefahrlos zugänglichen Stelle des Rohrmagazins (1) befindet. In diesem Fall ergreift der Bediener das sich in der Magazinposition befindende Werkzeug mit der einen Hand, während er mit der anderen eine Druckluftpistole auf den Elastomeradapter (127) aufsetzt. Beim Betätigen der Druckluftpistole fährt der Spannadapter pneumatisch in seine Lösestellung, vgl. Figur 25. Die Hakenzungen der Spannzange (295) legen sich an den Spannzangenhalteabschnitt (294) an, so dass das Werkzeug aus dem Innenkonus (283) der Konushülse (282) kraftfrei herausgezogen werden kann.

Zum Einwechseln des Ersatzwerkzeuges wird dieser Vorgang wiederholt. Nach dem Absetzen oder Sperren der Druckluftblaspistole schieben die Schraubendruckfedern (305) des Vorspannringes (300) den Spannadapter (290) in seine Verriegelungsstellung, vgl. Figur 26. Das eingesetzte Werkzeug, in Figur 26 nicht dargestellt, sitzt nun durch die Schraubendruckfedern (305) vorgespannt in der Werkzeugaufnahme (270). Wird nun diese Werkzeugaufnahme (270) vor der Spindelwelle (50) positioniert, erfasst die arbeitsspindeleigene Spannzange (71), durch Hintergreifen der Ausnehmung (202), den Spannadapter (290). Über den Spannadapter (290) wird die Werkzeugaufnahme (270) gegen die Spindelwelle (50) gepresst. Hierbei wird ggf. zusätzlich die Spannzange (295) der zweiten Schnittstelle (296) endgültig gespannt.

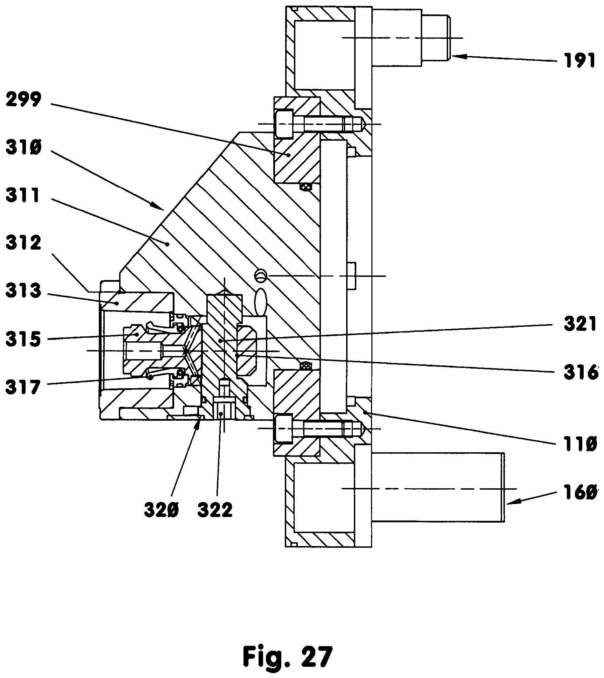

Figur 27 zeigt einen statischen Werkzeughalter (310). Dieser sitzt fest verschraubt über einen Speicherdeckel (110) in dem relativ elastischen Magazinrohrkörper (100). Der Werkzeughalter (310) hat in der Regel keine mechanische Verbindung zur Arbeitsspindel (40). Eine Ausnahme können Übertragungsmittel sein, mit deren Hilfe z.B. Schmier- und/oder Kühlmittel von der Arbeitsspindel auf den Werkzeughalter übertragen werden.

Nach Figur 27 ist auf dem Speicherdeckel (110) z.B. eine Grundplatte (299) befestigt, auf der z.B. in einer Bohrung der Grundkörper (311) des statischen Werkzeughalters (310) verschraubt sitzt, vgl. auch Figur 7. Der Grundkörper (311) hat eine Stufenbohrung (312), in der die erforderlichen Spannmittel sitzen. Im vorderen Bereich der Stufenbohrung (312) sitzt eine Halterkonushülse (313), an deren Innenwandung das aufzunehmende Werkzeug anliegt. In der Stufenbohrung (312) ist ein eine Spannzange (317) tragender Spanndorn (315) eingebaut. Der Spanndorn (315) hat hinter der Taille, an der seine Spannzange (317) anliegt, eine querliegende Querausnehmung (316), die durch eine im Grundkörper (311) gelagerte Spannwelle (320) durchdrungen wird.

Die z.B. um 180 Winkelgrade schwenkbare Spannwelle (320) hat außerhalb der Querausnehmung (316) zylindrische Abschnitte, mit denen sie im Grundkörper (311) gleitgelagert ist. In der Querausnehmung (316) hat sie die Form eines Gleichdicks (321), über das sich bei einem Drehen der Spannwelle (320) eine spannende Verschiebewirkung des Spanndorns (315) ergibt. Zum Antreiben der Spannwelle (320) hat diese in der freien Stirnseite z.B. eine Sechskantausnehmung (322).

Figur 28 zeigt einen weiteren statischen Werkzeughalter. Er ist ein Parallelgreifer (340). Der Parallelgreifer (340) hat zwei Greifarme (355, 356), die z.B. pneumatisch zu- und aufbewegt werden können. Mittels des Parallelgreifers (340) können beispielsweise Werkstücke aus dem Dreibackenfutter (3) aufgenommen werden, um sie an anderer Stelle abzulegen oder in sonstiger Weise weiterzugeben.

Der Parallelgreifer (340) sitzt z.B. mittig auf einer Basisplatte (361), die wiederum im Speicherdeckel (110) befestigt ist. Der Parallelgreifer (340) weist in einem Untergehäuse (341) eine Ausnehmung (342) auf, die unten mit einem Untergehäusedeckel (348) verschlossen ist. Der Boden (343) der Ausnehmung (342) hat eine Bohrung. In der Bohrung ist die Kolbenstange (345) eines z.B. ovalen Kolbens (344) abgedichtet geführt.

Am kolbenfernen Ende trägt die Kolbenstange (345) einen doppelseitigen Keilhaken (357), der in einem Obergehäuse (351) geführt ist. Beidseits des Keilhakens (357) ist im Obergehäuse (351) je ein Greifarm (355, 356) tragender Schlitten (353, 354) geführt. Der Keilhaken (357) hintergreift formschlüssig mit Spiel jeweils eine stirnseitige Ausnehmung des Schlittens (353, 354). Der Keilhaken (357) und die Schlitten (353, 354) bilden zwei Schiebekeilgetriebe.

Um die in Figur 28 in der Offenstellung stehenden Greifarme (355, 356) zu schließen, wird über ein Leitungssystem (363) Druckluft zwischen den Boden (343) und den Kolben (344) gefördert. Der nach rechts wandernde Kolben (344) zieht über den Keilhaken (357) die Schlitten (353, 354) aufeinander zu. Die Druckluft hierfür erhält der Parallelgreifer beispielsweise über das Leitungssystem (363). In ihm wird aus einem Kanal des Magazinrohrkörpers (100) über die Abstützzunge (143) Druckluft in den Speicherdeckel (110) und von dort aus durch die Basisplatte (361) in das Untergehäuse (341) gepumpt.

Da der Speicherdeckel (110) in der Arbeitsposition (195) nicht direkt auf den Abstützzungen (142, 143) aufliegt, befindet sich im Speicherdeckel (110) in der Arbeitsfuge zwischen ihm und der entsprechenden Abstützzunge (143, 144) eine Lippendichtung (364) oder ein O-Ring, der den jeweiligen Spalt zwischen den Bauteilen (110) und (143, 144) überbrückt.

Alternativ kann die Druckluft z.B. auch über die Zentrier- und Stützeinrichtung (190), beispielsweise dort über einen hohlen Stützbolzen (191), dem Speicherdeckel (110) zugeführt werden. Auf vergleichbare Weise können über Zentrier- und Stützeinrichtung (190) oder das Speicherdeckelspannsystem (150) auch elektrischer Strom und Steuersignale transportiert werden. Hierzu werden z.B. am Stützbolzen (191) oder am Einzugsbolzen (170) entsprechende Stecker und in den jeweiligen Gegenstücken (36, 160) passende Buchsen integriert.

Zum Öffnen der Greifarme (355, 356) wird über ein weiteres - hier nicht dargestelltes - Leitungssystem der zwischen dem Kolben (344) und dem Untergehäusedeckel (348) liegende Zylinderraum mit Druck beaufschlagt.

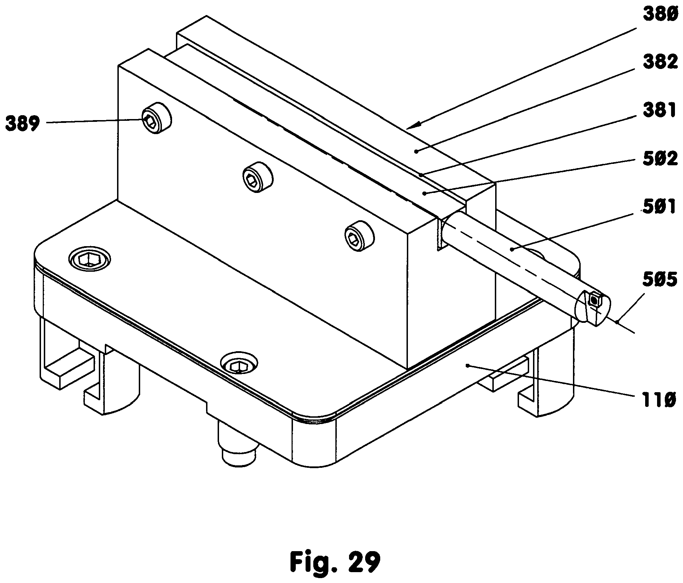

In Figur 29 wird als statische Werkzeugaufnahme (380) ein auf einem Speicherdeckel (110) montierter Stahlspanner (381) mit eingespanntem Drehmeißel (501) dargestellt. Der Stahlspanner (381) ist ein quaderförmiger Körper, in dessen Oberseite ein nach oben offener Kanal (382) eingearbeitet ist. Im Kanal (382), der einen rechteckigen Querschnitt aufweist, ist der Drehmeißel (501) über seinen z.B. vierkantförmigen Schaft (502) mit Hilfe von drei Klemmschrauben (389) starr befestigt. Die Klemmschrauben (389) pressen den Drehmeißel (501) an die Kanalwand, die der Kanalwand gegenüberliegt, in der die Klemmschrauben (389) eingeschraubt sind. Da die Mittellinie (505) des Drehmeißels (501) nach Figur 3 parallel zu der Mittellinie (109) verläuft, ist die Unterkante des Drehmeißels (501) so hoch über der Oberseite (151) des Speicherdeckels (110) angeordnet, dass sie beim andockenden Einziehen des Speicherdeckels (110) in die Speicherdeckelausnehmung (141) nicht die radiale Außenwandung des Magazinrohrträgers (100) kontaktiert.

### Bezugszeichenliste:

- 1: Rohrmagazin
- 2: Mittellinie, Rotationsmittellinie von (1)
- 3: Drehmaschine, Werkzeugmaschine
- 4: Dreibackenfutter
- 5: Mittellinie, Rotationsmittellinie von (4)
- 6: y-Schlitten
- 7: z-Schlitten
- 8: x-Schlitten
- 9: Werkstück

- 10: Zentralblock aus GGG40
- 11: Quader
- 12: Befestigungsseite, seitlich
- 13: Stirnseite, frei, vorderseitig
- 14: Querausnehmungen, groß
- 15: Sacklochbohrung
- 16: Längsleitung
- 17: Querleitung
- 18: Gewindebohrung, gestuft für (182)

- 21: Zapfen, gestuft
- 22: Anschraubscheibe
- 23: Bohrung in (105), gestuft
- 25: Wälzlager, Kreuzrollenlager
- 28: Hohlrad
- 29: Rückseite von (10, 11)

- 31: Rotationsantrieb
- 32: Stirnrad, Antriebsrad
- 33: Nadellagerinnenring
- 34: Dichtring
- 36: Stützhülse, Gegenstück zu (191)
- 37: Zentriereindrehung
- 38: Bereich, vorn
- 39: Schraube

- 40: Arbeitsspindel, Motorspindel
- 41: Mittellinie
- 42: Motorengehäuse, rohrförmig
- 43: Spiralnut
- 44: Innenflansch
- 45: Spindelflansch, vorn
- 46: Schulterlager, vorn
- 47: Flanschdeckel, flanschförmig
- 48: Schulterlager, hinten
- 49: Flanschhülse

- 50: Spindelwelle
- 51: Stirnfläche, Stirnseite
- 52: Lagersitz, vorn
- 53: Außengewinde, vorn
- 54: Stufenbohrung
- 55: Ausnehmung, konisch
- 56: Gewindehülse
- 57: Gewindehülsenflansch
- 58: Mehrfachumgriff

- 60: Gehäusedeckel, vorn
- 62: Auswuchtring
- 64: Spanndeckel
- 65: Messzahnrad
- 66: Sensorträgerplatte
- 67: Sensor
- 70: Spannvorrichtung
- 71: Spannzange
- 72: Zugdorn, Spreizdorn
- 73: Zugankerschraube
- 74: Tellerfederstempel
- 75: Stempelkonus
- 76: Tellerfedern
- 79: Näherungsschalter

- 80: Schmiermitteldrehdurchführung
- 81: Gehäuse
- 82: Hohlzapfen, zentral, verdrehgesichert
- 83: Schmiermittelübergabewelle
- 84: Deckel, gewölbt
- 85: Dichthülse
- 86: Gegenhülse, längsverschiebbar
- 87: Ringkolben
- 88: Stützdeckel, mit zentraler Bohrung
- 89: Schaltkragen

- 90: Elektromotor, Antriebsmotor
- 91: Stator
- 92: Rotor
- 95: Arbeitsposition einer Werkzeugaufnahme
- 96: Magazinposition einer Werkzeugaufnahme

- 100: Magazinrohrkörper, Trommel 1 Ebene, 8 Werkzeugaufnahmeplätze (131-138)
- 101: Werkzeugaufnahmeebene
- 102: Ring, hinten
- 103: Ring, vorn
- 104: Längsstreben
- 105: Magazinrohrstützdeckel
- 106: Lagerdeckel
- 107: Basisplatte
- 108: Innenraum
- 109: Mittellinie

- 110: Speicherdeckel
- 112: Nut für Dichtring, umlaufend, außen
- 113: Werkzeugträgerstufenbohrung, Ausnehmung
- 114: Plansenkung
- 115: Radialspielabschnitt
- 116: Endabschnitt, zylindrisch
- 117: Teilsenkungen, sichelförmig, Ausnehmungen
- 119: Fangbund, plan

- 120: Aufnahmeform, umgriffsartig
- 121: Haltering
- 122: Senkung, konisch
- 123: Grund
- 124: Umlaufnut mit Hintergriff
- 125: Dichtring
- 126: Aufnahmeform, flanschartig
- 127: Elastomeradapter
- 128: System aus Bohrungen
- 129: Schrauben

- 131-138: Werkzeugaufnahmeplätze
- 139: Federelemente, Schraubendruckfedern
- 141: Speicherdeckelausnehmung
- 142: Scheitellinie von (141)
- 143: Abstützzungen, erste, oben
- 144: Abstützzungen, zweite, unten
- 145: Oberseite
- 146: Einsenkung
- 147: Hintergriffsnuten
- 148: Wandung hinten
- 149: Arbeitsfuge von (110) in (141)

- 150: Speicherdeckelspannsystem, axial und radial
- 151: Speicherdeckeloberseite
- 152: Speicherdeckelunterseite, Rückseite
- 153: Längseinfräsung
- 154: Sacklochbohrungen für (139)
- 155: Seiteneinfräsung
- 156: Stufenbohrung für (161)

- 160: Einzugdoppelhaken, Gegenstück zu (170)
- 161: Lagerzapfen, hohl
- 162: Gabel, zweiarmig
- 163: Gabelarme
- 164: Hintergriffhaken
- 165: Schraube

- 170: Einzugsbolzen
- 171: Nuten, seitlich
- 172: Zugschraube
- 173: Zylinderbüchse
- 174: Umlaufnut für Druckmittel
- 175: Rechteckkanalnut für (182)
- 176: Zylinderboden
- 177: erster Bereich, Dicht- und Zentriersitz
- 178: zweiter Bereich, Innengewinde
- 179: dritter Bereich, Zylinderinnenwandung
- 180: vierter Bereich, Bohrung mit Nut für Dichtring

- 181: Zylinderzwischenboden
- 182: Sperrbolzen
- 183: Betätigungsdoppelkolben
- 184: Kolbenstange, erste, hohl
- 185: Kolben, erster, klein
- 186: Kolbenstange, zweite
- 187: Kolben, zweiter, groß
- 188: Längsbohrungen

- 190: Zentrier- und Abstützeinrichtung
- 191: Stützbolzen
- 192: Zentrierzapfen
- 193: Anlagebund
- 194: Schraube

- 195: Arbeitsposition von (110), Endlage
- 196: Magazinposition von (110), Endlage

- 200: Werkzeugaufnahme, dynamisch, einfach
- 201: Werkzeugaufnahmeschaft
- 202: Ausnehmung mit Hintergriff, zentral Hintergriffsausnehmung
- 203: Außenkonus, Konus
- 204: Flansch
- 205: Zentrierfläche, kegelstumpfmantelförmige; konusförmiger Bereich von (204)
- 206: Sacklochbohrungen
- 207: Anschlagring
- 208: Ringnut
- 209: System aus Bohrungen

- 211: Ausnehmung in (201), konisch
- 212: Spannzange
- 219: Mittellinien der dynamischen Werkzeugaufnahmen

- 220: Teilungspositionierelement, topfförmig
- 221: Boden
- 222: Kragen
- 225: Schraubendruckfeder

- 230: Werkzeugaufnahme, dynamisch; Handspanner
- 231: Stufenbohrung, zentral
- 232: Konushülse
- 233: Konusabschnitt
- 234: Ringdeckel
- 235: Führungsschraube
- 236: Planbund
- 237: Bajonettabschnitt
- 238: Bajonettsteg

- 241: Handspanneinsatz
- 242: Quernuten
- 245: Spannbacken
- 246: Sondergewindebolzen
- 247: Ausdrückstifte

- 250: Werkzeugaggregat, Werkzeugaufnahme, dynamisch
- 251: Werkzeugaufnahmeschaft
- 252: HSK-Ausnehmung
- 253: Bohrung, zentral
- 254: Innenkerbverzahnung

- 257: Haltering, rohrförmig
- 258: Schrauben

- 261: Aggregategehäuse
- 263: Antriebswelle
- 264: Kronenrad
- 265: Außenkerbverzahnung
- 267: Abtriebswelle
- 268: Stirnrad
- 269: Spannzange

- 270: Werkzeugaufnahme, dynamisch; halbautomatisch
- 271: Werkzeugaufnahmeschaft
- 272: Stufenbohrung, zentral
- 273: Spannhülsenführzone
- 274: Sicherungsringnut
- 275: Dichtungsringnut
- 276: Planfläche
- 277: Zylinderzone
- 278: Sicherungsring
- 279: O-Ring

- 280: Ringsteg
- 281: Zentrier- und Außengewindeabschnitt
- 282: Konushülse
- 283: Innenkonus
- 284: Zentrierstirnnut
- 285: Ringnut
- 286: Positionierring
- 287: Sicherungsring
- 288: O-Ring
- 289: Zylinderraum

- 290: Spannadapter
- 291: Spannhülse
- 292: Kolbenstangenabschnitt
- 293: Kolben
- 294: Spannzangenhalteabschnitt
- 295: Spannzange, 2. Schnittstelle
- 296: HSK-Schnittstelle, 2. Schnittstelle
- 299: Grundplatte, Halteplatte

- 300: Vorspannring
- 301: Stirnfläche, rückwärtig
- 302: Sacklochbohrungen
- 303: Ringnut

- 305: Schraubendruckfedern
- 308: O-Ring

- 310: Werkzeughalter, statisch
- 311: Grundkörper
- 312: Stufenbohrung
- 313: Halterkonushülse
- 315: Spanndorn
- 316: Querausnehmung
- 317: Spannzange

- 320: Spannwelle
- 321: Gleichdick
- 322: Sechskantausnehmung, Innensechskant

- 340: Parallelgreifer, statischer Werkzeughalter
- 341: Untergehäuse
- 342: Ausnehmung, oval
- 343: Boden
- 344: Kolben, oval
- 345: Kolbenstange
- 348: Untergehäusedeckel

- 351: Obergehäuse
- 353, 354: Schlitten
- 355, 356: Greifarme
- 357: Keilhaken

- 361: Basisplatte, Halteplatte
- 363: Leitungssystem für Druckluft oder Hydrauliköl
- 364: Lippendichtung oder O-Ring

- 370: Blinddeckel

- 380: statischer Werkzeughalter für Drehmeißel
- 381: Stahlspanner
- 382: Kanal
- 389: Klemmschrauben

- 400: Schwenkriegelsysteme
- 401: Anschlagriegel
- 402: Rohr
- 403: Querbalken

- 405: Fixierschraube
- 407: Anschlagbolzen
- 408: Senkbohrung
- 409: Senkung von (408)

- 500: Werkzeug, Spiralbohrer
- 501: Drehmeißel
- 502: Schaft
- 505: Mittellinie von (501)

- 510: Achsenkreuz zu (500)

## Patentansprüche

1. Umlaufendes Rohrmagazin (1) mit mehreren in einer Werkzeugaufnahmeebene (101) liegenden Werkzeugaufnahmen (200, 230, 250, 270, 310, 340, 380), in dessen Innenraum (108) eine Arbeitsspindel (40) in einem werkzeugmaschinenseitig ortsfest angeordneten, formsteifen Zentralblock (10) gelagert ist,
- wobei der Zentralblock (10) zur Aufnahme der Werkzeugaufnahmen (200, 230, 250, 270, 310, 340, 380) oder Werkzeuge - in jeweils einem Werkzeugaufnahmeplatz (131 - 138) - einen ein- oder mehrteiligen Magazinrohrkörper (100) aufweist,
- wobei der Magazinrohrkörper (100) wälz- und/oder gleitgelagert um den Zentralblock (10) angetrieben, rotierbar ist,
- wobei der Magazinrohrkörper (100) pro Werkzeugaufnahmeplatz (131 - 138) einen Speicherdeckel (110) zur Magazinierung einer Werkzeugaufnahme (200, 230, 250, 270, 310, 340, 380) und/oder eines Werkzeuges aufweist,
- wobei der Speicherdeckel (110) mit der für die Werkstückbearbeitung erforderlichen Werkzeugaufnahme (200, 230, 250, 270, 310, 340, 380) und/oder dem erforderlichen Werkzeug am Zentralblock (10) vor der vorderen Stirnseite der Arbeitsspindel (40) in Umlaufrichtung des Magazinrohrkörpers (100)
- in einer Arbeitsposition (195) - zum Andocken am Zentralblock (10) und/oder zum Ankuppeln der Werkzeugaufnahme (200, 230, 250, 270, 310, 340, 380) und/oder des Werkzeugs an der Arbeitsspindel (40) positionierbar ist,
**dadurch gekennzeichnet, dass** der einzelne Speicherdeckel (110) im Magazinrohrkörper (100) radial zu dessen Mittellinie (109) zwischen zwei Endlagen (195, 196) bewegbar ist.

2. Umlaufendes Rohrmagazin gemäß Anspruch 1, **dadurch gekennzeichnet, dass** der Abstand zwischen der Werkzeugaufnahmeebene (101) des Magazinrohrkörpers (100) und der Vorderkante des Magazinrohrkörpers (100) kürzer ist als 25% des Durchmessers des Magazinrohrkörpers (100).

3. Umlaufendes Rohrmagazin gemäß Anspruch 1, **dadurch gekennzeichnet, dass** der Abstand zwischen der Werkzeugaufnahmeebene (101) des Magazinrohrkörpers (100) und der Rückseite (29) des Zentralblocks (10) kürzer ist als 80% des Durchmessers des Magazinrohrkörpers (100).

4. Umlaufendes Rohrmagazin gemäß Anspruch 1, **dadurch gekennzeichnet, dass** es ein Speicherdeckelspannsystem (150) aufweist, das jeweils einen Speicherdeckel (110) hydraulisch, elektromechanisch oder pneumatisch am Zentralblock (10) radial und/oder axial am Zentralblock (10) kraft- und/oder formschlüssig festklemmt.

5. Umlaufendes Rohrmagazin gemäß Anspruch 1, **dadurch gekennzeichnet, dass** es eine Zentrier- und Stützeinrichtung (190) aufweist, die jeweils einen Speicherdeckel (110) am Zentralblock (10) radial, in Umfangsrichtung und parallel zur Mittellinie (109) zentriert.

6. Umlaufendes Rohrmagazin gemäß Anspruch 1, **dadurch gekennzeichnet, dass** die Speicherdeckel (110) in ihre jeweilige Magazinposition (196) durch Abstützung am Magazinrohrkörper (100) mittels Federkraft und/oder durch einen Gasüberdruck im Innenraum (108) des Magazinrohrkörpers (100) bring- und positionierbar sind.

7. Umlaufendes Rohrmagazin gemäß Anspruch 1, **dadurch gekennzeichnet, dass** die Speicherdeckel (110) quer zu ihrem zwischen Magazinposition (196) und Arbeitsposition (195) liegenden Verstellhub eine rechteckige Querschnittsform aufweisen und gegenüber der speicherdeckellagernden Speicherdeckelausnehmung (141) abgedichtet sind.

8. Umlaufendes Rohrmagazin gemäß Anspruch 7, **dadurch gekennzeichnet, dass** der Verfahrweg des einzelnen Speicherdeckels (110) 40% ± 10% der radialen Wandstärke des Magazinrohrkörpers (100) im Bereich der speicherdeckellagernden Speicherdeckelausnehmung (141) beträgt.

## Claims

1. Revolving tube magazine (1) with a plurality of tool holders (200, 230, 250, 270, 310, 340, 380) lying on a tool holder plane (101), in the interior (108) of which a working spindle (40) is mounted in a dimensionally stable central block (10) arranged in a fixed position on the machine tool side,
- wherein the central block (10) has a single- or multiple-part magazine tube body (100) for receiving the tool holders (200, 230, 250, 270, 310, 340, 380) or tools in a respective tool holder location (131 - 138),
- wherein the magazine tube body (100), mounted on an anti-friction and/or slide bearing, is rotatable, being driven around the central block (10)
- wherein the magazine tube body (100) has, per tool holder location (131 - 138), a holder cover (110) for storing a tool holder (200, 230, 250, 270, 310, 340, 380) and/or a tool,
- wherein the holder cover (110), with the tool holder (200, 230, 250, 270, 310, 340, 380) required for machining the workpiece and/or the required tool, can be positioned on the central block (10) in front of the front end face of the working spindle (40), in the direction of rotation of the magazine tube body (100),
- in a working position (195) in order to dock with the central block (10) and/or to couple the tool holder (200, 230, 250, 270, 310, 340, 380) and/or the tool to the working spindle (40),
**characterised in that** the individual holder cover (110) in the magazine tube body (100) can be moved, radially to its centre line (109), between two end positions (195, 196).

2. Revolving tube magazine according to claim 1, **characterised in that** the distance between the tool holder plane (101) of the magazine tube body (100) and the front edge of the magazine tube body (100) is shorter than 25% of the diameter of the magazine tube body (100).

3. Revolving tube magazine according to claim 1, **characterised in that** the distance between the tool holder plane (101) of the magazine tube body (100) and the rear side (29) of the central block (10) is shorter than 80% of the diameter of the magazine tube body (100).

4. Revolving tube magazine according to claim 1, **characterised in that** it has a holder cover clamping system (150) which in each case hydraulically, electromechanically or pneumatically clamps a holder cover (110) radially and/or axially on the central block (10) in a force- and/or form-locking manner.

5. Revolving tube magazine according to claim 1, **characterised in that** it has a centring and support device (190) which in each case centres a holder cover (110) on the central block (10) radially, in a circumferential direction and parallel to the centre line (109).

6. Revolving tube magazine according to claim 1, **characterised in that** the holder covers (110) can be brought into, and positioned in, their respective magazine position (196) by being supported on the magazine tube body (100) by means of a spring force and/or through a gas overpressure in the interior (108) of the magazine tube body (100).

7. Revolving tube magazine according to claim 1, **characterised in that** the holder covers (110) have a rectangular cross-sectional shape transversely to their adjustment travel between magazine position (196) and working position (195) and are sealed against the holder cover recess (141) which supports the holder cover.

8. Revolving tube magazine according to claim 7, **characterised in that** the movement path of the individual holder cover (110) amounts to 40% ± 10% of the radial wall thickness of the magazine tube body (100) in the region of the holder cover recess (141) which supports the holder cover.

## Revendications

1. Magasin tubulaire rotatif (1) comportant plusieurs logements d'outils (200, 230, 250, 270, 310, 340, 380) situés dans un plan de logement d'outil (101), dans l'espace intérieur (108) duquel une broche de travail (40) est montée dans un bloc central (10) indéformable agencé fixement du côté machine-outil,
- dans lequel le bloc central (10) présente pour la réception des logements d'outils (200, 230, 250, 270, 310, 340, 380) ou des outils, dans respectivement un emplacement de logement d'outil (131 - 138), un corps tubulaire de magasin (100) à une ou plusieurs parties,
- dans lequel le corps tubulaire de magasin (100) monté sur palier à roulement et/ou sur palier lisse est entraîné de façon à pouvoir tourner autour du bloc central (10),
- dans lequel le corps tubulaire de magasin (100) présente par emplacement de logement d'outil (131 - 138) un couvercle de stockage (110) pour le magasinage d'un logement d'outil (200, 230, 250, 270, 310, 340, 380) et/ou d'un outil,
- dans lequel le couvercle de stockage (110) peut être positionné avec le logement d'outil (200, 230, 250, 270, 310, 340, 380) nécessaire pour l'usinage d'une pièce et/ou avec l'outil nécessaire sur le bloc central (10) devant la face avant de la broche de travail (40) dans la direction périphérique du corps tubulaire de magasin (100),
- dans une position de travail (195) pour la fixation sur le bloc central (10) et/ou l'accouplement des logements d'outils (200, 230, 250, 270, 310, 340, 380) et/ou de l'outil sur la broche de travail (40),
**caractérisé en ce que** le couvercle de stockage individuel (110) peut être déplacé dans le corps tubulaire de magasin (100) radialement par rapport à sa ligne médiane (109) entre deux positions finales (195, 196).

2. Magasin tubulaire rotatif selon la revendication 1, **caractérisé en ce que** la distance entre le plan de logement d'outil (101) du corps tubulaire de magasin (100) et le bord avant du corps tubulaire de magasin est inférieure à 25 % du diamètre du corps tubulaire de magasin (100).

3. Magasin tubulaire rotatif selon la revendication 1, **caractérisé en ce que** la distance entre le plan de logement d'outil (101) du corps tubulaire de magasin (100) et la face arrière (29) du bloc central (10) est inférieure à 80 % du diamètre du corps tubulaire de magasin (100).

4. Magasin tubulaire rotatif selon la revendication 1, **caractérisé en ce qu'**il présente un système de serrage de couvercle de stockage (150) qui serre respectivement un couvercle de stockage (110) de façon hydraulique, électromécanique ou pneumatique au bloc central (10) radialement et/ou axialement au bloc central (10) par force et/ou complémentarité de forme.

5. Magasin tubulaire rotatif selon la revendication 1, **caractérisé en ce qu'**il présente un dispositif de centrage et d'appui (190), qui centre un couvercle de stockage (110) sur le bloc central (10), respectivement radialement, dans la direction périphérique et parallèlement à la ligne médiane (109).

6. Magasin tubulaire rotatif selon la revendication 1, **caractérisé en ce que** le couvercle de stockage (110) peut être amené et positionné dans sa position de magasin respective (196) par appui sur le corps de magasin (100) au moyen d'une force élastique et/ou par une surpression de gaz dans l'espace intérieur (108) du corps tubulaire de magasin (100).

7. Magasin tubulaire rotatif selon la revendication 1, **caractérisé en ce que** les couvercles de stockage (110) présentent perpendiculairement à leur course d'ajustement entre une position de magasin (196) et une position de travail (195) une forme de section rectangulaire et sont hermétiques par rapport à la cavité de couvercle de stockage (141) recevant le couvercle de stockage.

8. Magasin tubulaire rotatif selon la revendication 7, caractérisé en ce le trajet de déplacement du couvercle de stockage individuel (110) correspond à 40 % ± 10 % de l'épaisseur de paroi radiale du corps tubulaire de magasin (100) dans la zone de la cavité de couvercle de stockage (141) recevant le couvercle de stockage.
